# EUROPÄISCHE PATENTSCHRIFT

(11) **EP 2 899 427 B1**
(45) Veröffentlichungstag und Bekanntmachung des Hinweises auf die Patenterteilung: **01.04.2020**
(21) Anmeldenummer: 14166940.8
(22) Anmeldetag: 05.05.2014
(51) Int. Cl.: F16H 3/64, F16H 3/66

(54) **Getriebe für ein Kraftfahrzeug**
Transmission for a motor vehicle
Boîte de vitesses d'un véhicule automobile

(30) Priorität: 05.06.2013 DE 102013210429
(43) Veröffentlichungstag der Anmeldung: 29.07.2015
(73) Patentinhaber: ZF Friedrichshafen AG, 88046 Friedrichshafen (DE)
(72) Erfinder: Kaltenbach, Johannes, 88048 Friedrichshafen (DE)

(56) Entgegenhaltungen:
- EP-A1- 0 618 382
- EP-A1- 2 245 336
- WO-A1-2007/147800

## Beschreibung

Die Erfindung betrifft ein Getriebe, insbesondere ein Mehrstufengetriebe, für ein Kraftfahrzeug, umfassend ein Gehäuse, eine Antriebswelle, eine Abtriebswelle, zumindest zwei Planetenradsätze, wobei der erste Planentenradsatz ein Sonnenrad, zumindest einen Planeten, einen Planetenträger und ein Hohlrad umfasst, sowie mehrere Schaltelemente.

Aus der DE 10 2013 202 045 ist ein Gruppengetriebe eines Kraftfahrzeugs bekannt geworden. Das Gruppengetriebe umfasst ein mehrstufiges Hauptgetriebe und eine dem Hauptgetriebe antriebstechnisch nachgeordnete Bereichsgruppe. Die Bereichsgruppe ist dabei in Planetenbauweise ausgeführt und umfasst zwei miteinander gekoppelte Planetenradsätze mit jeweils einem Sonnenrad, mehreren Planetenräder tragende Planetenträger und ein Hohlrad. Die beiden Planetenradsätze der Bereichsgruppe sind koaxial und axial gestaffelt zueinander angeordnet, wobei der erste Planetenradsatz axial zwischen dem Hauptgetriebe und dem zweiten Planetenradsatz angeordnet ist. Das Sonnenrad des ersten Planetenradsatzes ist drehfest mit der Hauptwelle des Hauptgetriebes verbunden und bildet somit das Eingangselement der Bereichsgruppe. Der Planetenträger des ersten Planetenradsatzes ist drehfest mit dem Hohlrad des zweiten Planetenradsatzes verbunden. Das Hohlrad des ersten Planetenradsatzes ist drehfest mit dem Sonnenrad des zweiten Planetenradsatzes verbunden. Der Planetenträger des zweiten Planetenradsatzes ist drehfest mit der Ausgangswelle verbunden und bildet somit das Ausgangselement der Bereichsgruppe.

Des Weiteren ist in der DE 10 2004 014 082 A1 ein Doppelkupplungsgetriebe in Planetenbauweise offenbart. Das Doppelkupplungsgetriebe weist dabei vier Planetenradsätze, zwei reibschlüssige Schaltelemente und mehrere formschlüssige Schaltelemente auf. Die reibschlüssigen Schaltelemente sind zum Zuschalten verschiedener Leistungspfade in einen Kraftfluss des Planetengetriebes vorgesehen. Die formschlüssigen Schaltelemente sind wiederum zum Einstellen verschiedener Übersetzungsstufen in den Leistungspfaden des Planetengetriebes vorgesehen. Des Weiteren sind die reibschlüssigen Schaltelemente sowie die formschlüssigen Schaltelemente derart zwischen den Wellen der Planetenradsätze, einem Gehäuse bzw. gehäusefesten Bauteil des Planetengetriebes sowie einer Getriebeeingangswelle und einer Getriebeausgangswelle angeordnet, dass Gangstufenwechsel über die reibschlüssigen Schaltelemente zugkraftunterbrechungsfrei durchführbar sind.

Nachteilig dabei ist hierbei unter anderem, dass aufgrund der innenliegenden Schaltelemente ein Topfdurchgriff für die Betätigung notwendig ist. Des Weiteren sind bei dem beschriebenen Doppelstufengetriebe nur sechs Gänge vorhanden.

Im Dokument EP 0 618 382 A1 wird eine Hilfsgetriebegruppe für ein Verbundgetriebe und insbesondere eine verbesserte Hilfsgetriebegruppe mit einem Planetenzahnradsatz zum Festlegen wählbarer Drehmomentübertragungswege zwischen einer Eingangswelle und einer Ausgangswelle der Hilfsgruppe offenbart.

Eine Aufgabe der vorliegenden Erfindung ist es daher, ein Getriebe für ein Kraftfahrzeug zur Verfügung zu stellen, welche eine gute Zugänglichkeit von Schaltelementen ermöglicht, eine hohe Anzahl an Gängen aufweist und kompakt baut. Darüber hinaus ist es eine Aufgabe der vorliegenden Erfindung, ein alternatives Getriebe anzugeben.

Die vorliegende Erfindung löst die Aufgabe mit einem Getriebe gemäß Anspruch 1.

Die Erfindung löst die Aufgabe ebenfalls mit einem Kraftfahrzeug, insbesondere mit einem Personen- oder Lastkraftwagen, mit einem Getriebe gemäß einem der Ansprüche 1 bis 10.

Vorteile hierbei sind unter anderem, dass die Mehrheit der Schaltelemente leicht zugänglich ist und beispielsweise für Schaltgabeln in einfacher Weise von außen zugänglich ist. Es ist somit kein Topfdurchgriff zur Betätigung der entsprechenden Schaltelemente notwendig. Weitere Vorteile sind eine kompakte Bauweise, kleine Trägheitsmassen und eine Leistungsdichte durch die Aufteilung auf mehrere Planetenräder. Darüber hinaus ist mit dem Getriebe eine ausreichend hohe Anzahl von Gängen darstellbar.

Über die Antriebswelle wird besonders bevorzugt ein Drehmoment bzw. eine Rotationsbewegung einer Antriebswelle, beispielsweise eines Verbrennungsmotors, in das Getriebe eingeleitet.

Unter einer Welle ist nachfolgend nicht ausschließlich ein beispielsweise zylindrisches, drehbar gelagertes Maschinenelement zur Übertragung von Drehmomenten zu verstehen, sondern vielmehr sind hierunter auch allgemeine Verbindungselemente zu verstehen, die einzelne Bauteile oder Elemente miteinander verbinden, insbesondere Verbindungselemente, die mehrere Elemente drehfest miteinander verbinden.

Zwei Elemente werden insbesondere als miteinander verbunden bezeichnet, wenn zwischen den Elementen eine feste, insbesondere drehfeste Verbindung, besteht. Insbesondere drehen solche verbundenen Elemente mit der gleichen Drehzahl.

Zwei Elemente werden im Weiteren als verbindbar bezeichnet, wenn zwischen diesen Elementen eine lösbare Verbindung besteht. Insbesondere drehen solche Elemente mit der gleichen Drehzahl, wenn die Verbindung besteht.

Die verschiedenen Bauteile und Elemente der genannten Erfindung können dabei über eine Welle bzw. ein Verbindungselement, aber auch direkt, beispielsweise mittels einer Schweiß-, Press- oder einer sonstigen Verbindung miteinander verbunden sein.

Unter einer Kupplung ist vorzugsweise in der Beschreibung, insbesondere in den Ansprüchen, ein Schaltelement zu verstehen, welches, je nach Betätigungszustand, eine Relativbewegung zwischen zwei Bauteilen zulässt oder eine Verbindung zur Übertragung eines Drehmoments darstellt. Unter einer Relativbewegung ist beispielsweise eine Rotation zweier Bauteile zu verstehen, wobei die Drehzahl des ersten Bauteils und die Drehzahl des zweiten Bauteils voneinander abweichen. Darüber hinaus ist auch die Rotation nur eines der beiden Bauteile denkbar, während das andere Bauteil still steht oder in entgegengesetzter Richtung rotiert.

Im Folgenden ist unter einer nicht betätigten Kupplung eine geöffnete Kupplung zu verstehen. Dies bedeutet, dass eine Relativbewegung zwischen den beiden Bauteilen möglich ist. Bei betätigter bzw. geschlossener Kupplung rotieren die beiden Bauteile dementsprechend mit gleicher Drehzahl in dieselbe Richtung.

Unter einer Bremse ist vorzugsweise in der Beschreibung, insbesondere in den Ansprüchen, ein Schaltelement zu verstehen, welches auf einer Seite mit einem feststehenden Element, beispielsweise einem Gehäuse, und auf einer anderen Seite mit einem rotierbaren Element verbunden ist.

Im Folgenden ist unter einer nicht betätigten Bremse eine geöffnete Bremse zu verstehen. Dies bedeutet, dass das rotierende Bauteil frei rotierbar ist, d.h., die Bremse bevorzugt keinen Einfluss auf die Drehzahl des rotierenden Bauteils nimmt. Bei betätigter bzw. geschlossener Bremse erfolgt eine Reduzierung der Drehzahl des rotierbaren Bauteils bis hin zum Stillstand, d.h., dass eine feste Verbindung zwischen rotierbarem Element und feststehendem Element herstellbar ist. Element und Bauteil sind in diesem Zusammenhang gleichzusetzen. Grundsätzlich ist auch eine Verwendung von Schaltelementen möglich, die im nicht betätigten Zustand geschlossen und im betätigten Zustand geöffnet sind. Dementsprechend sind die Zuordnungen zwischen Funktion und Schaltzustand der oben beschriebenen Schaltzustände in umgekehrter Weise zu verstehen. Bei den nachfolgenden Ausführungsbeispielen anhand der Figuren, wird zunächst eine Anordnung zugrunde gelegt, in der ein betätigtes Schaltelement geschlossen und ein nicht betätigtes Schaltelement geöffnet ist.

Ein Planetenradsatz umfasst ein Sonnenrad, ein Planetenträger respektive Steg und ein Hohlrad. An dem Planetenträger respektive Steg drehbar gelagert sind Planetenräder oder Planeten, welche mit der Verzahnung des Sonnenrades und/oder der Verzahnung des Hohlrades kämmen.

Nachfolgend beschreibt ein Minus-Planetenradsatz einen Planetenradsatz mit einem Planetenträger, an dem die Planetenräder drehbar gelagert sind, mit einem Sonnenrad und mit einem Hohlrad, wobei die Verzahnung zumindest eines der Planetenräder sowohl mit der Verzahnung des Sonnenrades als auch mit der Verzahnung des Hohlrades kämmt, wodurch das Hohlrad und das Sonnenrad in entgegengesetzte Drehrichtungen rotieren, wenn das Sonnenrad bei feststehendem Planetenträger rotiert.

Ein Plus-Planetenradsatz unterscheidet sich zu dem gerade beschriebenen Minus-Planetenradsatz dahingehend, dass der Plus-Planetenradsatz innere und äußere Planetenräder aufweist, welche drehbar an den Planetenträger gelagert sind. Die Verzahnung der inneren Planetenräder kämmt dabei einerseits mit der Verzahnung des Sonnenrades und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Planetenträger das Hohlrad und das Sonnenrad in die gleiche Drehrichtung rotieren.

Durch die Verwendung von Planetenradsätzen können besonders kompakte Getriebe realisiert werden, wodurch eine große Freiheit bei der Anordnung des Getriebes in dem Fahrzeug erreicht wird.

Unter den Elementen eines Planetenradsatz werden insbesondere das Sonnenrad, das Hohlrad, der Planetenträger respektive Steg und die Planetenräder respektive die Planeten des Planetenradsatz verstanden.

Besonders bevorzugt sind die Schaltelemente selektiv, also einzeln und bedarfsgerecht betätigbar, wodurch unterschiedliche Gänge durch unterschiedliche Übersetzungsverhältnisse zwischen der Antriebswelle und der Abtriebswelle realisierbar sind. Je höher die Anzahl der Gänge, desto feiner kann eine Gangabstufung bei einer großen Getriebespreizung realisiert werden und somit kann beispielsweise ein Verbrennungsmotor eines Kraftfahrzeugs in einem optimalen Drehzahlbereich und damit möglichst wirtschaftlich betrieben werden. Gleichzeitig trägt dies zu einer Erhöhung des Fahrkomforts bei, da der Verbrennungsmotor bevorzugt auf einem niedrigen Drehzahlniveau betreibbar ist. So werden beispielsweise auch Lärmemissionen reduziert, welche durch den Betrieb des Verbrennungsmotors entstehen.

Weiterhin können die Schaltelemente derart ausgebildet sein, dass für eine Änderung eines Schaltzustandes der Schaltelemente Energie, nicht jedoch für das Beibehalten des Schaltzustandes selbst benötigt wird.

Hierzu eignen sich in besonderer Weise bedarfsgerecht betätigbare Schaltelemente, wie beispielsweise elektromechanische Schaltelemente oder elektromagnetische Schaltelemente. Sie zeichnen sich, insbesondere im Vergleich zu konventionell hydraulisch betätigbaren Schaltelementen, durch einen besonders geringen und effizienten Energiebedarf aus, da sie nahezu verlustfrei betreibbar sind. Darüber hinaus kann in vorteilhafter Weise darauf verzichtet werden, permanent einen Steuerdruck für die Betätigung der beispielsweise konventionell hydraulischen Schaltelemente vorzuhalten, bzw. das jeweilige Schaltelement in geschaltetem Zustand permanent mit dem erforderlichen Hydraulikdruck zu beaufschlagen. Hierdurch können beispielsweise weitere Bauteile wie eine Hydraulikpumpe entfallen, soweit diese ausschließlich der Ansteuerung und Versorgung der konventionell hydraulisch betätigbaren Schaltelemente dienen. Erfolgt die Versorgung weiterer Bauteile mit Schmiermitteln nicht über eine separate Schmiermittelpumpe, sondern über die gleiche Hydraulikpumpe, so kann diese zumindest kleiner dimensioniert werden. Auch eventuell auftretende Undichtigkeiten an Ölübergabestellen des Hydraulikkreislaufs, insbesondere bei rotierenden Bauteilen, entfallen. Dies trägt besonders bevorzugt ebenfalls zu einer Effizienzsteigerung des Getriebes in Form eines höheren Wirkungsgrades bei.

Bei der Verwendung von bedarfsgerecht betätigbaren Schaltelementen der oben genannten Art ist es besonders vorteilhaft, wenn diese von außen gut zugänglich sind. Dies hat unter anderem den Vorteil, dass die benötigte Schaltenergie den Schaltelementen gut zugeführt werden kann. Daher sind Schaltelemente besonders gut bevorzugt so angeordnet, dass sie von außen gut zugänglich sind. Von außen gut zugänglich bedeutet im Sinne der Schaltelemente, das zwischen dem Gehäuse des Getriebes und dem Schaltelement keine weiteren Bauteile angeordnet sind, bzw. dass die Schaltelemente besonders bevorzugt an der Antriebswelle oder an der Abtriebswelle angeordnet sind.

Unter dem Begriff "Bindbarkeit" ist vorzugsweise in der Beschreibung, insbesondere in den Ansprüchen zu verstehen, dass bei unterschiedlicher geometrischer Lage die gleiche Anbindung bzw. Bindung von Schnittstellen gewährleistet ist, ohne dass sich einzelne Verbindungselemente oder Wellen kreuzen.

Unter dem Begriff "Standübersetzung" ist diejenige Übersetzung zu verstehen, die durch das Übersetzungsverhältnis zwischen Sonnenrad und Hohlrad des jeweiligen Planetenradsatz realisiert ist, wenn der Planetenträger respektive Steg feststeht.

Weitere vorteilhafte Ausführungsformen, Merkmale und Vorteile der Erfindung sind in den Unteransprüchen beschrieben.

Nach Anspruch 1 weist das Getriebe wenigstens einen weiteren dritten, vierten, fünften und/oder sechsten Planetenradsatz auf, wobei wenigstens zwei der weiteren Planetenradsätze, insbesondere geometrisch, hintereinander im Getriebe und/oder wenigstens zwei der weiteren Planetenradsätze geschachtelt angeordnet sind. Dabei kann insbesondere der erste Planetenradsatz innerhalb des vierten Planetenradsatzes und/oder der fünfte Planentenradsatz innerhalb des sechsten Planetenradsatzes angeordnet sein. Ein durch die geschachtelte Bauweise erzielbarer Vorteil ist, dass das Getriebe axial noch kompakter ausgeführt werden kann.

Nach Anspruch 1 ist ein dritter Planetenradsatz zwischen dem zweiten und vierten Planetenradsatz angeordnet, wobei das Sonnenrad des dritten Planetenradsatzes mit dem Gehäuse gehäusefest verbunden oder mittels eines fünften Schaltelements mit dem Gehäuse verbindbar ist. Ist ein dritter Planetenradsatz zwischen den beiden Planetenradsätzen angeordnet wird damit die Anzahl möglicher durch das Getriebe darstellbarer Gangstufen weiter erhöht.

Zweckmäßigerweise ist der Steg des dritten Planetenradsatzes drehfest mit dem Hohlrad des vierten Planetenradsatzes verbunden oder der Steg des dritten Planetenradsatzes ist mit dem Sonnenrad des fünften Planetenradsatzes verbunden, oder der Steg des dritten Planetenradsatzes ist mittels eines sechsten Schaltelements mit dem Sonnenrad des ersten Planetenradsatzes verbindbar oder mittels eines siebten Schaltelements mit dem Hohlrad des vierten Planetenradsatzes verbindbar. Durch die Schaltelemente zum Koppeln des Stegs des dritten Planetenradsatzes kann die Anzahl von möglichen durch das Getriebe darstellbaren Gangstufen ebenfalls erhöht werden.

Nach Anspruch 1 sind die Stege des zweiten Planetenradsatzes drehfest mit dem Hohlrad des dritten Planetenradsatzes verbunden oder die Stege des zweiten Planetenradsatzes sind mittels eines achten Schaltelements mit dem Hohlrad des dritten Planetenradsatzes verbindbar. Ein durch eine feste Verbindung der Stege eines Planentenradsatzes mit dem Hohlrad eines anderen Planetenradsatzes erzielbarer Vorteil ist, dass der Aufbau des Getriebes wesentlich vereinfacht wird.

Zweckmäßigerweise ist eine elektrische Maschine angeordnet, insbesondere zur Bereitstellung von Rückwärtsgängen durch das Getriebe. Durch die elektrische Maschine kann einerseits eine elektrische Zugkraftunterstützung bereitgestellt werden, andererseits kann diese auch zur Darstellung von Rückwärtsgängen verwendet werden, indem diese bei einer Darstellung eines Vorwärtsgangs eine umgekehrte Drehrichtung letztendlich der Abtriebswelle bewirkt.

Vorteilhafterweise ist das Sonnenrad des vierten Planetenradsatzes mit dem Gehäuse verbunden oder mittels eines neunten Schaltelements mit dem Gehäuse verbindbar. Auf diese Weise kann das das zentrale Element des vierten Planentenradsatzes, das Sonnenrad, unter anderem je nach Bedarf mit dem Gehäuse fest verbunden werden oder es wird der Aufbau des Getriebes vereinfacht, wenn das Sonnenrad fest mit dem Gehäuse angeordnet ist.

Zweckmäßigerweise ist das Sonnenrad des vierten Planetenradsatzes mittels eines zehnten Schaltelements mit dem Hohlrad des vierten Planetenradsatzes verbindbar. Ist ein Sonnenrad eines Planetenradsatzes mittels eines Schaltelements mit dem Hohlrad des Planetenradsatzes verbindbar, so wird damit die Anzahl möglicher durch das Getriebe darstellbarer Gangstufen weiter erhöht.

Vorteilhafterweise ist das Hohlrad des ersten Planetenradsatzes mit dem Sonnenrad des ersten Planetenradsatzes drehfest verbunden, durch das dritte Schaltelement mit dem Gehäuse verbindbar und/oder mit dem vierten Schaltelement mit der Abtriebswelle verbindbar. Sind Schaltelemente vorgesehen zum Koppeln des Hohlrads des Planetenradsatzes, so wird damit die Anzahl möglicher durch das Getriebe darstellbarer Gangstufen ebenfalls weiter erhöht. Darüber hinaus kann in flexibler Weise das Hohlrad des ersten Planetenradsatzes mit unterschiedlichen weiteren Getriebeelementen verbunden werden.

Zweckmäßigerweise sind der fünfte Planetenradsatz und der sechste Planetenradsatz geschachtelt angeordnet und bilden eine Rückwärtsgang-Gruppe, wobei die Rückwärtsgang-Gruppe am Ausgang des Getriebes angeordnet ist und wobei das Sonnenrad des fünften Planetenradsatzes mit dem Steg des ersten Planetenradsatzes drehfest verbunden ist, und der Steg des fünften Planetenradsatzes mittels eines elften Schaltelements zur Darstellung wenigstens eines Rückwärtsgangs mit dem Gehäuse verbindbar ist und wobei das Sonnenrad des sechsten Planetenradsatzes mittels eines zwölften Schaltelements mit dem Gehäuse verbindbar ist und mittels eines dreizehnten Schaltelements mit dem Steg des fünften Planetenradsatzes verbindbar ist. Die so gebildete Rückwärtsgang-Gruppe kann in ein bestehendes Getriebe auf einfache Weise integriert werden. Des Weiteren erlaubt die geschachtelte Anordnung des fünften und sechsten Planetenradsatzes, dass das Getriebe axial noch kompakter ausgeführt werden kann, was insgesamt den Bauraum für das Getriebe reduziert.

Vorteilhafterweise ist der fünfte Planetenradsatz am Eingang des Getriebes angeordnet und das Sonnenrad des fünften Planetenradsatzes ist drehfest mit der Antriebswelle ausgebildet und der Steg des fünften Planetenradsatzes ist mittels einem elften Schaltelement zum Bereitstellen mindestens eines Rückwärtsgangs mit dem Gehäuse verbindbar oder ist mittels einem weiteren Schaltelement zum Bereitstellen mindestens eines Vorwärtsgangs mit der Antriebswelle verbindbar. Durch das Vorsehen des fünften Planetenradsatzes am Eingang des Getriebes wird auf einfache Weise eine Vorschaltgruppe bereitgestellt. Der mindestens eine Rückwärtsgang kann hierbei als Wendesatz am Getriebeeingang angeordnet sein.

Zweckmäßigerweise bilden der erste Planetenradsatz und der zweite Planetenradsatz ein erstes Teilgetriebe und der erste Planetenradsatz bildet zusammen mit dem dritten Planetenradsatz und dem vierte Planetenradsatz ein zweites Teilgetriebe. Der erste Planetenradsatz stellt dabei eine von beiden Teilgetrieben gemeinsam genutzte Bereichsgruppe bereit, sodass ebenfalls der Bauraum durch die gemeinsame Nutzung des ersten Planetenradsatzes in beiden Teilgetrieben für das Getriebe gesenkt werden kann.

Vorteilhafterweise ist ein Vorgelege angeordnet, wobei das Vorgelege wenigstens eine Vorgelegewelle und wenigstens zwei Radebenen aufweist, wobei die erste Radebene mittels eines Schaltelements mit dem Steg des dritten Planetenradsatzes verbindbar ist und die zweite Radebene mit dem Steg des ersten Planetenradsatzes in Triebverbindung steht. Durch die beiden Radebenen des Vorgeleges kann auf einfache Weise ein doppelter Gangsprung realisiert werden.

Zweckmäßigerweise ist eine Trennkupplung als Anfahrkupplung angeordnet, welche insbesondere einen Antriebsmotor mit der Antriebswelle am Eingang des Getriebes verbindet. Die Trennkupplung kann, beispielsweise bei einer Zugkraftunterstützung durch eine elektrische Maschine, als Anfahrkupplung genutzt werden, wenn der Energiespeicher der elektrischen Maschine leer oder die elektrische Maschine zu schwach ist.

Vorteilhafterweise sind mittels mindestens neun Schaltelementen und mindestens zwei Lastschaltelementen, sowie sechs Planetenradsätzen mindestens 14 Vorwärtsgänge und mindestens sieben Rückwärtsgänge darstellbar.

Weitere wichtige Merkmale und Vorteile der Erfindung ergeben sich aus den Zeichnungen, und aus der dazugehörigen Figurenbeschreibung anhand der Zeichnungen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigen jeweils in schematischer Form
Fig. 1a ein Getriebe gemäß einer ersten Ausführungsform der vorliegenden Erfindung;
Fig. 1b ein Übersetzungsschema für ein Getriebe gemäß Fig. 1a;
Fig. 1c eine Schaltmatrix für ein Getriebe gemäß der Fig. 1a;
Fig. 2 ein Getriebe gemäß einer zweiten Ausführungsform der Erfindung;
Fig. 3a ein Getriebe gemäß einer dritten Ausführungsform der vorliegenden Erfindung;
Fig. 3b ein Übersetzungsschema für ein Getriebe gemäß Fig. 3a;
Fig. 3c eine Schaltmatrix für ein Getriebe gemäß der Fig. 3a;
Fig. 4a ein Getriebe gemäß einer vierten Ausführungsform der vorliegenden Erfindung;
Fig. 4b ein Übersetzungsschema für ein Getriebe gemäß Fig. 4a;
Fig. 4c eine Schaltmatrix für ein Getriebe gemäß der Fig. 4a;
Fig. 5 ein Getriebe gemäß noch einer fünften Ausführungsform der vorliegenden Erfindung;
Fig. 6a ein Getriebe gemäß einer sechsten Ausführungsform der vorliegenden Erfindung;
Fig. 6b ein Übersetzungsschema für ein Getriebe gemäß Fig. 6a;
Fig. 6c eine Schaltmatrix für ein Getriebe gemäß der Fig. 6a;
Fig. 7a ein Getriebe gemäß einer siebten Ausführungsform der vorliegenden Erfindung;
Fig. 7b ein Übersetzungsschema für ein Getriebe gemäß Fig. 7a;
Fig. 7c eine Schaltmatrix für ein Getriebe gemäß der Fig. 7a;
Fig. 8a ein Getriebe gemäß einer achten Ausführungsform der vorliegenden Erfindung;
Fig. 8b ein Übersetzungsschema für ein Getriebe gemäß Fig. 8a;
Fig. 8c eine Schaltmatrix für ein Getriebe gemäß der Fig. 8a;
Fig. 9a ein Getriebe gemäß einer neunten Ausführungsform der vorliegenden Erfindung;
Fig. 9b ein Übersetzungsschema für ein Getriebe gemäß Fig. 9a;
Fig. 9c eine Schaltmatrix für ein Getriebe gemäß der Fig. 9a;
Fig. 10 Getriebe gemäß einer zehnten Ausführungsform der vorliegenden Erfindung;
Fig. 11 Getriebe gemäß einer elften Ausführungsform der vorliegenden Erfindung;
Fig. 12a ein Getriebe gemäß einer zwölften Ausführungsform der vorliegenden Erfindung;
Fig. 12b ein Übersetzungsschema für ein Getriebe gemäß Fig. 12a; und
Fig. 12c eine Schaltmatrix für ein Getriebe gemäß der Fig. 12a;

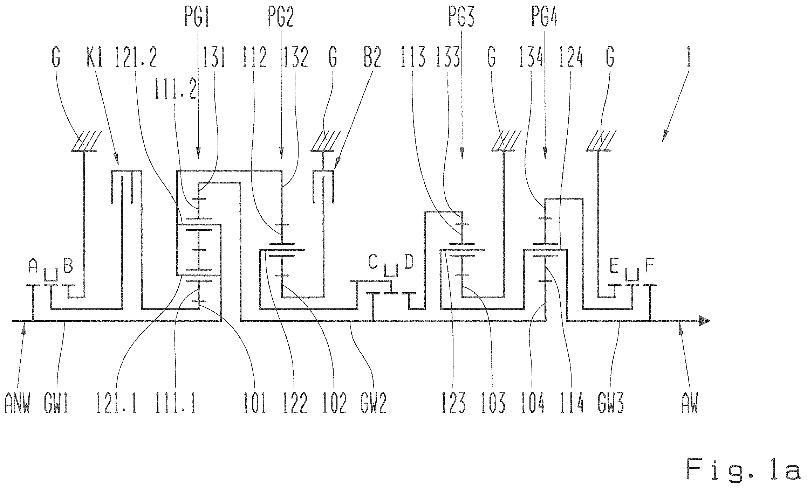

Fig. 1a zeigt ein Getriebe gemäß einer ersten Ausführungsform der vorliegenden Erfindung.

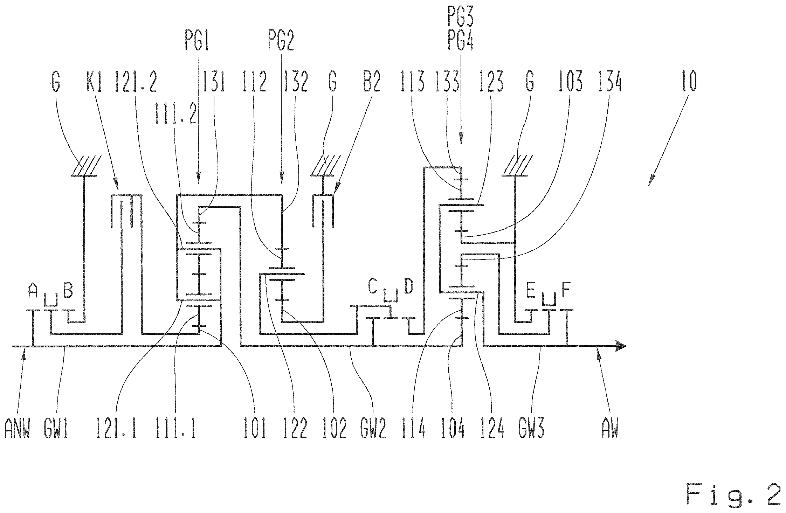

In Fig. 1a bezeichnet Bezugszeichen 1 ein Mehrstufengetriebe in Planetenbauweise. Das in Fig.1a dargestellte Mehrstufengetriebe 1 kann beispielsweise in Form eines Doppelkupplungsgetriebes mit sieben Gängen umfassend zwei Direct-Drive (DD)-Gänge ausgebildet sein. Die Bezeichnung "Direct-Drive" bedeutet insbesondere, dass der höchste Gang einem Direktgang entspricht. Weiter ist in Fig. 1a, sowie in den nachfolgenden Figuren 2-12a jeweils nur eine Getriebehälfte des rotationssymmetrischen Getriebes dargestellt.

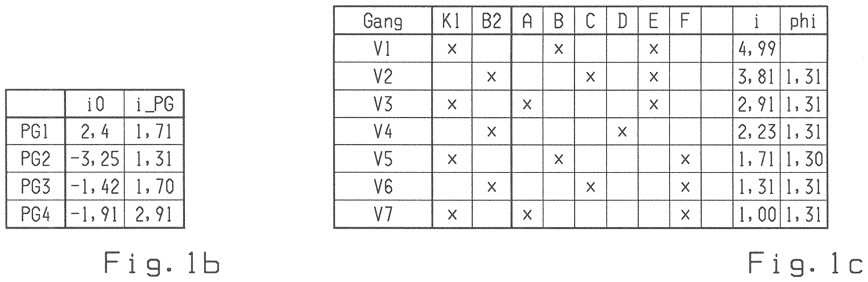

Das Getriebe 1 weist insgesamt acht Schaltelemente A, B, C, D, E, F, K1, B2 auf, wobei eines in Form einer Kupplung K1 und eines in Form einer Bremse B2 ausgebildet ist sowie vier Planetenradsätze PG1, PG2, PG3 und PG4. Die sechs Schaltelemente A, B, C, D, E und F bilden dabei beispielsweise drei Doppelschaltelemente A/B, C/D und E/F. Vorzugsweise sind die meisten oder besonders bevorzugte alle Schaltelemente des Getriebes 1 von außen zugänglich in einem Gehäuse G für das Getriebe 1 angeordnet, so dass sie von außen betätigt werden können, beispielsweise mittels Schaltgabeln oder dergleichen. Dies gilt für alle Ausführungsformen der Erfindung und insbesondere die in den Figuren 1-12 beschriebenen Ausführungsbeispiele. Außerdem weist das Getriebe 1 beispielsweise mehrere Getriebewellen GW1, GW2 und GW3 auf, wobei die erste Getriebewelle GW1 die Antriebswelle ANW und die dritte Getriebewelle GW3 die Abtriebswelle AW bildet.

Im Folgenden wird zunächst der allgemeine Aufbau des ersten Planetenradsatzes PG1, des zweiten Planetenradsatzes PG2, des dritten Planetenradsatzes PG3 und des vierten Planetenradsatzes PG4 des Getriebes 1 beschrieben. Die Planetenradsätze PG1, PG2, PG3, PG4 weisen jeweils ein Sonnenrad 101, 102, 103, 104 auf, welches mit zumindest einem Planeten 111.1, 111.2, 112, 113, 114 zur Übertragung von Kraft und Drehmomenten zusammenwirkt. Der erste Planetenradsatz PG1 weist hierbei zwei Planeten 111.1 und 111.2 auf, wobei der Planet 111.1 mit dem Sonnenrad 101 in Eingriff steht. Auf der radialen Außenseite des jeweiligen Planeten 111.2, 112, 113, 114 des ersten, zweiten, dritten und vierten Planetenradsatzes PG1, PG2, PG3, PG4 ist jeweils ein Hohlrad 131, 132, 133, 134 angeordnet, in das der jeweilige Planet 111.2, 112, 113, 114 zur Übertragung von Kraft und Drehmomenten eingreift. Die Planeten 111.1, 111.2, 112, 113, 114 sind dabei jeweils an einem entsprechenden Planetenträger 121.1, 121.2, 122, 123, 124 drehbar gelagert.

Bei dem ersten Planetenradsatz PG1 ist dessen Sonnenrad 101 mit der Kupplung K1 verbunden. Weiter ist ein erstes Doppelschaltelement A/B vorgesehen, welches die beiden Schaltelemente A und B zusammenfasst. Ist das erste Schaltelement A geschlossen oder betätigt, so ist die Antriebswelle ANW mit der Kupplung K1 verbunden und, wenn zusätzlich auch die Kupplung K1 betätigt ist, entsprechend die Antriebswelle ANW mit dem Sonnenrad 101. Ist das zweite Schaltelement B geschlossen oder betätigt, so ist die Kupplung K1 mit dem Gehäuse G verbunden und, wenn zusätzlich auch die Kupplung K1 betätigt ist, ist entsprechend das Gehäuse G mit dem Sonnenrad 101 verbunden, so dass das Sonnenrad 101 gehäusefest ist. Das Hohlrad 131 des ersten Planetenradsatzes PG1 ist mit dem Sonnenrad 104 des vierten Planetenradsatzes PG4 drehfest verbunden. Hierbei sind das Hohlrad 131 sowie das Sonnenrad 104 jeweils drehfest mit der zweiten Getriebewelle GW2 verbunden. Des Weiteren ist der erste Planet 111.1 des ersten Planetenradsatzes PG1 auf dem ersten Steg/Planetenträger 121.1 drehbar gelagert. Der zweite Planet 111.2 ist auf dem zweiten Steg/Planetenträger 121.2 drehbar gelagert. Der erste Steg 121.1 und der zweite Steg 121.2 des ersten Planetenradsatzes PG1 sind einerseits mit der Antriebswelle ANW bzw. ersten Getriebewelle GW1 und andererseits mit dem Hohlrad 132 des zweiten Planetenradsatzes PG2 drehfest verbunden.

Der Planet 112 des zweiten Planetenradsatzes PG2 ist hierbei auf dem Steg 122 des zweiten Planetenradsatzes PG2 drehbar gelagert. Das Sonnenrad 102 des zweiten Planetenradsatzes PG2 ist über die Bremse B2 mit dem Gehäuse G drehfest verbindbar. Der Steg 122 des zweiten Planetenradsatzes PG2 ist mittels des zweiten Doppelschaltelements C/D mit weiteren Getriebeelementen koppelbar. Das zweite Doppelschaltelement C/D fasst hierbei die zwei Schaltelemente C und D zusammen. Mittels des dritten Schaltelements C ist der Steg 122 des zweiten Planetenradsatzes PG2 mit der zweiten Getriebewelle GW2 bzw. dem Sonnenrad 104 des vierten Planetenradsatzes PG4 verbindbar. Des Weiteren ist mittels des vierten Schaltelements D der Steg 122 des zweiten Planetenradsatzes wiederum mit dem Hohlrad 133 des dritten Planentenradsatzes PG3 verbindbar.

Das Sonnenrad 103 des dritten Planetenradsatzes PG3 ist mit dem Gehäuse G verbunden bzw. gehäusefest. Der Planet 113 des dritten Planetenradsatzes PG3 ist auf dem Steg 123 des dritten Planetenradsatzes PG3 drehbar gelagert und mit dem Steg 124 des vierten Planetenradsatzes PG4 drehfest verbunden. Das Hohlrad 133 des dritten Planetenradsatzes PG3 ist, wie zuvor beschrieben, mittels des vierten Schaltelements D mit dem Steg 122 des zweiten Planetensatzes PG2 verbindbar.

Das Sonnenrad 104 des vierten Planetenradsatzes PG4 ist drehfest mit dem Hohlrad 131 des ersten Planentenradsatzes PG1 verbunden. In dem Ausführungsbeispiel in Fig. 1a sind dazu das Sonnenrad 104 des vierten Planentenradsatzes PG4 und das Hohlrad 131 des ersten Planetenradsatzes PG1 mit der zweiten Getriebewelle GW2 drehfest verbunden. Der Planet 114 des vierten Planetenradsatzes PG4 ist auf dem Steg 124 des vierten Planetenradsatzes PG4 drehbar gelagert, wobei der Steg 124 drehfest mit der Abtriebswelle AW bzw. der dritten Getriebewelle GW3 verbunden ist. Das Hohlrad 134 des vierten Planetenradsatzes PG4 ist mittels des fünften Schaltelements E des Doppeltschaltelements E/F mit dem Gehäuse G verbindbar. Ist dagegen das sechste Schaltelement F betätigt oder geschlossen, so ist das Hohlrad 134 des vierten Planetenradsatzes PG4 mit der Abtriebswelle AW bzw. dritten Getriebewelle GW3 verbunden.

Das Getriebe 1, wie es in Fig. 1a gezeigt ist, weist ein erstes und zweites Teilgetriebe TG1 und TG2 auf, mit jeweils einem Reibschaltelement, d.h. der Kupplung K1 bzw. der Bremse B2, für Lastschaltungen. Die Reibschaltelemente K1 und B2 sind dabei verteilte Schaltelemente, so dass das Getriebe 1 gemäß Fig. 1a keine typische Doppelkupplung aufweist, da keine gemeinsame Antriebswelle für die Kupplung K1 und die Bremse B2 vorgesehen ist.

Das erste Teilgetriebe TG1 umfasst den ersten und vierten Planetenradsatz PG1 und PG4 und das zweite Teilgetriebe TG2 den zweiten, dritten und vierten Planetenradsatz PG2, PG3 und PG4.

Das erste Teilgetriebe TG1 weist 2x2 = 4 Übersetzungen auf, wobei das erste Doppelschaltelement A/B hierbei zwei Übersetzungen schaltet. Der Gangsprung k beträgt geometrisch z.B. 1,31. Das zweite Schaltelement B schaltet eine sog. Underdrive-Übersetzung k², die mittels des ersten Planetenradsatzes PG1 bereitstellbar ist. Der Antrieb erfolgt von der Antriebswelle ANW und der mit ihr drehfest verbundenen Stege 111.1 und 111.2 des ersten Planetenradsatzes PG1. Der Abtrieb erfolgt wiederum über das Hohlrad 131 des ersten Planetenradsatzes PG1 und das mit ihm drehfest verbundene Sonnenrad 104 des vierten Planetenradsatzes PG4. Das Sonnenrad 103 des dritten Planetenradsatzes PG3 ist gehäusefest, wie zuvor beschrieben. Es liegt hier ein Plus-Getriebe vor. Des Weiteren ist mittels des ersten Schaltelementes A eine Direkt-Übersetzung i=1 schaltbar. Der erste Planetenradsatz PG1 ist dabei im Blockumlauf. Diese beiden Übersetzungen werden durch den vierten Planetenradsatz PG4 verdoppelt. Es sind somit vier Gänge darstellbar. Der vierte Planetenradsatz PG4 ist dabei eine von beiden Teilgetrieben TG1 und TG2 gemeinsam genutzte Bereichsgruppe. Dabei verläuft die Antriebswelle ANW durch das erste Teilgetriebe TG1 hindurch zu dem zweiten Teilgetriebe TG2.

Das zweite Teilgetriebe TG2 umfasst, wie zuvor beschrieben, den zweiten, dritten und vierten Planetenradsatz PG2, PG3 und PG4 und es gibt somit 1x2 + 1 = 3 Übersetzungen. Das dritte Schaltelement C schaltet für das zweite Teilgetriebe TG2 eine Underdrive-Übersetzung k¹. Der Antrieb erfolgt dabei über das Hohlrad 132 des zweiten Planetenradsatzes PG2, welches mit den beiden Stegen 121.1 und 121.2 des ersten Planetenradsatzes PG1 und der Antriebswelle ANW drehfest verbunden ist. Der Abtrieb erfolgt wiederum über den Steg 122 des zweiten Planetenradsatzes PG2, wobei mittels der Bremse B2 das Sonnenrad 102 des zweiten Planetenradsatzes PG2 mit dem Gehäuse G verbindbar ist. Dieses wird über den vierten Planetenradsatz PG4 doppelt genutzt, d.h. es gibt 1x2=2 Übersetzungen. Das vierte Schaltelement D schaltet einen Gang mit der Übersetzung k³ unabhängig von der Bereichsgruppe, die von dem vierten Planentenradsatz PG4 gebildet wird. Dieser Gang wird durch den zweiten und dritten Planetenradsatz PG2 und PG3 zusammen erzeugt. Der zweite Planetenradsatz PG2 erzeugt dabei eine Übersetzung k¹ und der dritten Planetenradsatz PG3 eine Übersetzung k². Dies ergibt hintereinandergeschaltet die Übersetzung k³. Dieser Gang wird somit durch den vierten Planetenradsatz PG4 doppelt genutzt. Dadurch kann der vierte Planetenradsatz PG4 mit den fünften Schaltelement E und dem sechsten Schaltelement F als Hintergrundschaltung lastfrei geschaltet werden.

Fig. 1b zeigt ein Übersetzungsschema für ein Getriebe gemäß Fig. 1a.

In Fig. 1b ist beispielhaft eine Übersetzungstabelle für Übersetzungen der vier Planetenradsätze PG1-PG4 des Getriebes gemäß Fig. 1a gezeigt. Dabei ist eine jeweilige Standgetriebeübersetzung i0 und eine jeweilige Übersetzung des Planetenradsatz i_PG für die Planetenradsätze PG1-PG4 angegeben.

Fig. 1c zeigt eine Schaltmatrix für ein Getriebe gemäß Fig. 1a.

In Fig. 1c ist eine beispielhafte Schaltmatrix des Getriebes gemäß Fig. 1a gezeigt. In der in Fig. 1c gezeigten Schaltmatrix sind nur Kreuze für diejenigen der Schaltelemente, d.h. die Schaltelemente A-F, die Kupplung K1 und die Bremse B2, gesetzt, die für den jeweiligen der Vorwärtsgänge V1-V7, notwendig sind und in dem jeweiligen Gang betätigt bzw. geschlossen werden. Es können aber auch weitere Schaltelemente betätigt bzw. geschlossen werden, um einen Gang in dem anderen Teilgetriebe vorzuwählen oder um an allen Wellen definierte Drehzahlverhältnisse herzustellen usw.. Diese zusätzlich betätigten bzw. geschlossenen Schaltelemente sind dann lastfrei. In der vorletzten Spalte der Schaltmatrix sind beispielhaft die Gangübersetzungen i der geschalteten Vorwärtsgänge V1-V7 angegeben. In der letzten Spalte der Schaltmatrix ist wiederum das daraus resultierende Übersetzungsverhältnis phi des nächstniedrigeren Gangs zu dem betreffenden Vorwärtsgang V1-V7 angegeben.

Ein Vorteil des Getriebes, wie es in Fig.1a gezeigt ist, liegt darin, dass alle Schaltelemente von außen zugänglich sind. Für Schaltgabeln sind hierbei keine Topfdurchgriffe notwendig.

Ein derartiges Lastschaltgetriebe wäre ohne einen Rückwärtsgang oder kurz R-Gang unvollständig. Das in Fig. 1a und den hierzu korrespondierenden Fig. 1b und 1c dargestellte Getriebe dient daher als Grundlage für verschiedene Varianten von Rückwärtsgängen bzw. R-Gängen, wie anhand der nachfolgenden Fig. 2a bis 12a deutlich wird.

Die Synchronisierung der Schaltelemente A-F kann beispielsweise konventionell erfolgen in Form von einzeln synchronisierten Schaltelementen oder mit einer Zentralsynchronisierung für beide Teilgetriebe TG1 und TG2, z.B. mittels einer Getriebebremse und/oder mittels einer oder mehrerer elektrischer Maschinen bzw. E-Maschinen.

Fig. 2 zeigt ein Getriebe gemäß einer zweiten Ausführungsform der Erfindung.

In Fig. 2 ist eine weitere Ausführungsform des Mehrstufengetriebes gemäß Fig. 1a gezeigt. Das Mehrstufengetriebe 10 in Fig. 2a entspricht dabei in seinem Aufbau im Wesentlichen dem Getriebe 1 gemäß Fig. 1a, so dass auf die Beschreibung hierzu in Fig. 1a-1c verwiesen wird, um unnötige Wiederholungen zu vermeiden.

Das Getriebe 10 gemäß Fig. 2 unterscheidet sich von dem Getriebe 1 gemäß Fig. 1a dadurch, dass der dritte und vierte Planetenradsatz PG3 und PG4 geschachtelt angeordnet sind. Der vierte Planetenradsatz PG4 ist dabei radial und koaxial innerhalb des dritten Planetenradsatzes PG3 angeordnet. Das Sonnenrad 103 des dritten Planetenradsatzes PG3 ist fest mit dem Gehäuse G verbunden. Des Weiteren ist das Hohlrad 133 des dritten Planetenradsatzes PG3 mittels des vierten Schaltelements D mit dem Steg 122 des zweiten Planetenradsatzes PG2 verbindbar. Außerdem ist das Hohlrad 133 des dritten Planetenradsatzes PG3 mittels des dritten Schaltelements C mit dem Sonnenrad 104 des vierten Planetenradsatzes PG4 verbindbar. Der Planet 113 des dritten Planetenradsatzes PG3 ist auf dem Steg 123 des dritten Planetenradsatzes PG3 drehbar gelagert und der Steg 123 des dritten Planetenradsatzes PG3 ist mit dem Steg 124 des vierten Planetenradsatzes PG4 drehfest verbunden. Der Planet 114 des vierten Planetenradsatzes PG4 ist drehbar auf dem Steg 124 des vierten Planetenradsatzes PG4 angeordnet. Die beiden miteinander drehfest verbundenen Stege 123 und 124 des dritten und vierten Planetenradsatzes PG3 und PG4 sind wiederum drehfest mit einer dritten Getriebewelle GW3, hier in Form der Abtriebswelle AW, verbunden. Das Sonnenrad 104 des vierten Planetenradsatzes PG4 ist, wie zuvor beschrieben, drehfest mit der zweiten Getriebewelle GW2 und somit fest mit dem Hohlrad 131 des ersten Planetenradsatzes PG1 verbunden. Das Hohlrad 134 des vierten Planetenradsatzes PG4 ist mittels des dritten Doppelschaltelements E/F koppelbar. Das dritte Doppelschaltelement E/F fasst hierbei die zwei Schaltelemente E und F zusammen. Mittels des fünften Schaltelements E ist das Hohlrad 134 des vierten Planetenradsatzes PG4 mit dem Gehäuse G verbindbar. Ist dieses geschlossen, so sind das Hohlrad 134 und das Sonnenrad 103 des dritten Planetenradsatzes PG3 mit dem Gehäuse G verbunden und somit gehäusefest. Mittels des sechsten Schaltelements F ist das Hohlrad 134 des vierten Planetenradsatzes PG4 mit der dritten Getriebewelle GW3 bzw. der Abtriebswelle AW verbindbar.

Die Schachtelung des dritten und vierten Planetenradsatzes PG3 und PG4 ist möglich wegen einer betragsmäßig kleinen Standgetriebeübersetzung i0 des äußeren dritten Planetenradsatzes PG3. Die Standgetriebeübersetzung i0_PG3 des dritten Planetenradsatzes PG3 beträgt i0_PG3 = -1,42. Das bedeutet ein Sonnenrad mit einem großen Durchmesser.

Die Reibschaltelemente, d.h. die Kupplung K1 und die Bremse B2, können konstruktiv in einem weiteren nicht dargestellten Ausführungsbeispiel des Getriebes gemäß der Fig. 2a auch am Umfang des ersten und zweiten Planetenradsatzes PG1 und PG2 geschachtelt werden. Der Vorteil der Schachtelung liegt in der Einsparung von axialem Bauraum.

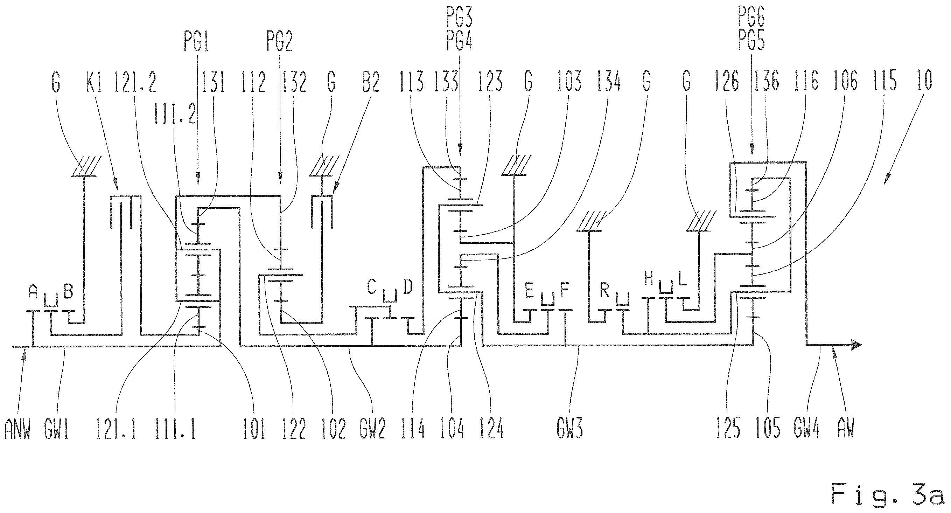

Fig. 3a zeigt ein Getriebe gemäß einer dritten Ausführungsform der Erfindung.

In Fig. 3a ist noch eine weitere Ausführungsform des Mehrstufengetriebes gemäß Fig. 1a gezeigt. Das Mehrstufengetriebe 10 in Fig. 3a entspricht dabei im Wesentlichen in seinem Aufbau der Variante des zuvor in Fig. 2 gezeigten Getriebes 10, so dass auf die Ausführungen zu Fig. 2 und entsprechend auch zu den Fig. 1a-1c verwiesen wird. Das in Fig. 3a gezeigte Getriebe 10 kann beispielsweise in Form eines Doppelkupplungsgetriebes mit einem 14-Gang DD (Direct Drive, d.h. der höchste Gang ist ein Direktgang) in Planetenbauweise ausgebildet sein. Das Getriebe wird im Folgenden als Hauptgetriebe 1 bezeichnet, erweitert um eine Range-Gruppe mit drei Bereichen (Low, High und R).

Das Getriebe 10 gemäß Fig. 3a unterscheidet sich von dem Getriebe 10 gemäß Fig. 2 dadurch, dass ein zusätzlicher fünfter und sechster Planetenradsatz PG5 und PG6, sowie drei zusätzliche Schaltelemente R, H und L angeordnet sind. Die Schaltelemente H und L sind dabei in dem Doppelschaltelement H/L zusammengefasst.

Die beiden zusätzlichen Planetenradsätze PG5 und PG6 sind nun auf folgende Weise verbunden: Der Steg 124 des vierten Planetenradsatzes PG4 ist drehfest mittels der dritten Getriebewelle GW3 mit dem Sonnenrad 105 des fünften Planentenradsatzes PG5 verbunden. Dementsprechend ist der Steg 124 des vierten Planetenradsatzes PG4 drehfest mit dem Sonnenrad 105 des fünften Planetenradsatzes PG5 verbunden. Der fünfte Planetenradsatz PG5 weist den Planeten 115 auf, welcher auf einem Steg 125 des fünften Planetenradsatzes PG5 drehbar gelagert ist. Der Steg 125 ist des Weiteren drehfest mit einem Hohlrad 136 des sechsten Planetenradsatzes PG6 verbunden. Der sechste Planetenradsatz PG6 weist des Weiteren einen Planeten 116 auf, welcher auf einem Steg 126 des sechsten Planetenradsatz PG6 drehbar gelagert ist. Der Steg 126 des sechsten Planenteradsatzes PG6 ist dabei drehfest mit einer vierten Getriebewelle GW4 verbunden, welche z.B. die Abtriebswelle AW bildet.

Wie zuvor beschrieben, ist ein zusätzliches siebtes Schaltelement R vorgesehen. Dieses siebte Schaltelement R verbindet, wenn es betätigt oder geschlossen ist, den Steg 125 des fünften Planetenradsatzes PG5 mit dem Gehäuse G. Des Weiteren ist zusätzlich das vierte Doppelschaltelement H/L vorgesehen. Mittels des achten Schaltelements H ist der Steg 125 des fünften Planetenradsatzes PG5 mit dem Sonnenrad 106 des sechsten Planetenradsatzes PG6 verbindbar oder koppelbar. Mittels des neunten Schaltelements L ist das Sonnenrad 106 des sechsten Planetenradsatzes PG6 mit dem Gehäuse G verbindbar.

Die sog. Range-Gruppe, mit der zumindest ein Rückwärtsgang bzw. kurz R-Gang darstellbar ist, umfasst den inneren fünften Planetenradsatz PG5 und den äußeren sechsten Planetenradsatz PG6, sowie die drei zusätzlichen Schaltelemente L, H und R. Es lässt sich bei der in Fig. 3a gezeigten Ausführungsform eine Verdoppelung der Gangzahl des Hauptgetriebes 1 durch eine der Bereichsgruppen L, H, R erreichen. Die 7-8 Schaltung, d.h. die Schaltung vom siebten Gang V7 auf den achten Gang V8, ist zugkraftunterbrochen. Es erfolgt ein Wechsel von L für "Low" auf H für "High". Dies ermöglicht den Einsatz des Getriebes insbesondere in Lastkraftwagen. Der Gangsprung V7-V8, d.h. der Gangsprung vom siebten Gang V7 auf den achten Gang V8, kann beispielsweise kleiner gewählt werden, wegen des Geschwindigkeitsverlusts während der zugkraftunterbrochenen Schaltung. Sämtliche Rückwärtsgänge oder R-Gänge sind untereinander lastschaltbar. Die Umschaltung vorwärts/rückwärts unter Einsatz der Schaltelemente L und R ist nicht lastschaltbar.

Ein Vorteil dieser Ausführungsform liegt darin, dass alle Schaltelemente A-F, sowie die Kupplung K1 und die Bremse B2, von außen zugänglich sind.

Die Ergänzung mit einer Range-Gruppe, wie sie beispielhaft in Fig. 3a gezeigt ist, ist bei allen Hauptgetriebe-Varianten möglich, die in der vorliegenden Anmeldung beschrieben sind. Die Range-Gruppe kann hierbei zumindest einen Rückwärtsgang bereitstellen.

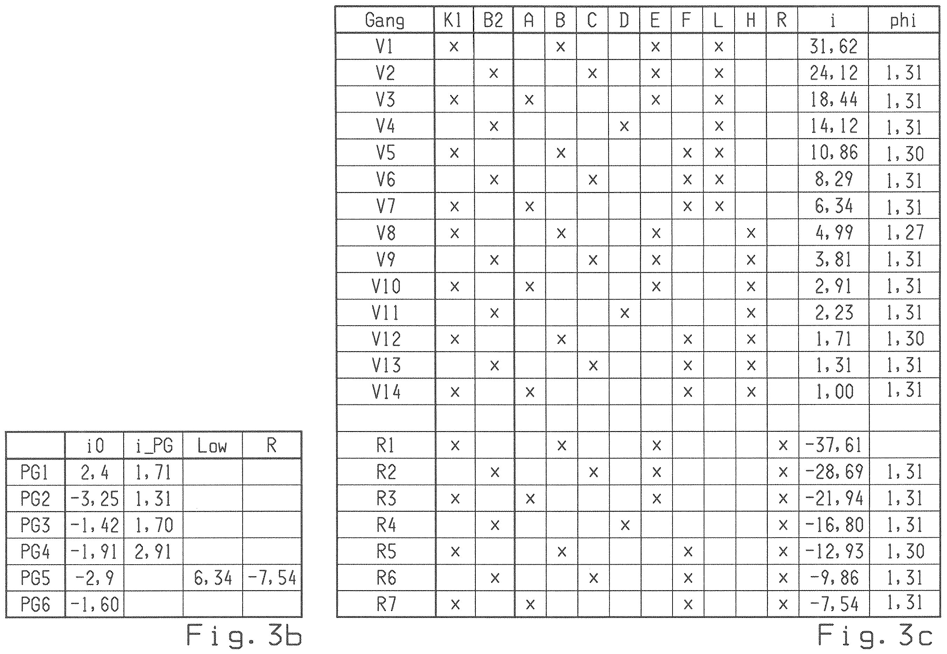

Fig. 3b zeigt ein Übersetzungsschema für ein Getriebe gemäß Fig. 3a.

Fig. 3b zeigt beispielhaft eine Übersetzungstabelle für Übersetzungen der sechs Planetenradsätze PG1-PG6 des Getriebes gemäß Fig. 3a. Dabei ist eine jeweilige Standgetriebeübersetzung i0 für die Planetenradsätze PG1-PG6 und eine jeweilige Übersetzung des Planetenradsatzes i_PG für die Planetenradsätze PG1-PG4 angegeben.

Fig. 3c zeigt eine Schaltmatrix für ein Getriebe gemäß Fig. 3a.

In Fig. 3c ist beispielhaft eine Schaltmatrix des Getriebes gemäß Fig. 3a gezeigt. In der in Fig. 3c gezeigten Schaltmatrix sind nur Kreuze für diejenigen der Schaltelemente, d.h. die Schaltelemente A-F, L, H und R, die Kupplung K1 und die Bremse B2, gesetzt, die für den jeweiligen der Vorwärtsgänge V1-V14 und Rückwärtsgänge R1-R7, notwendig sind und in diesem Gang betätigt bzw. geschlossen werden, ansonsten sind sie geöffnet. In der vorletzten Spalte der Schaltmatrix sind wieder beispielhaft die Gangübersetzungen i der geschalteten Vorwärtsgänge V1-V14 und Rückwärtsgänge R1-R7 angegeben. Außerdem ist in der letzten Spalte der Schaltmatrix das daraus resultierende Übersetzungsverhältnis phi des nächstniedrigeren Gangs zu dem betreffenden Vorwärtsgang V1-V14 bzw. Rückwärtsgang R1-R7 angegeben. Mittels des Getriebes gemäß Fig. 3a sind somit mindestens 14 Vorwärtsgänge und mindestens 7 Rückwärtsgänge darstellbar.

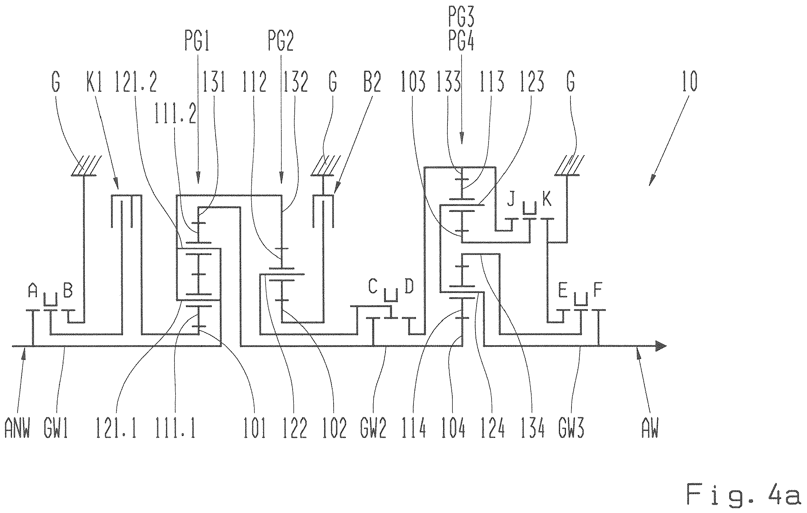

Fig. 4a zeigt ein Getriebe gemäß einer vierten Ausführungsform der vorliegenden Erfindung.

In Fig. 4a ist eine Variante des Mehrstufengetriebes gemäß Fig. 2 gezeigt. Das Mehrstufengetriebe 10 in Fig. 4a entspricht dabei in seinem Aufbau im Wesentlichen dem Getriebe 1 gemäß Fig. 2, so dass auf die Beschreibung hierzu in Fig. 2, sowie entsprechend auch auf Fig. 1a-1c verwiesen wird, um unnötige Wiederholungen zu vermeiden. Das in Fig. 4a gezeigte Getriebe 10 ist eine Variante des 7-Gang-DD-Getriebes mit einem Blockumlauf des dritten Planetenradsatzes PG3.

Das Mehrstufengetriebe 10 gemäß Fig. 4a unterscheidet sich von dem Getriebe gemäß Fig. 2 dadurch, dass der dritte Planetenradsatz PG3 in Fig. 4a mittels eines zusätzlichen siebten Schaltelements J mit dem Sonnenrad 103 des dritten Planetenradsatzes PG3 verbindbar ist. Um das Sonnenrad 103 des dritten Planetenradsatzes PG3 mit dem Gehäuse zu verbinden, ist des Weiteren das zusätzliche achte Schaltelement K vorgesehen, welches, wenn es betätigt bzw. geschlossen ist, das Sonnenrad 103 mit dem Gehäuse G verbindet. Das zusätzliche vierte Doppelschaltelement J/K ermöglicht einen Blockumlauf des dritten Planetenradsatzes PG3 in allen Vorwärtsgängen außer dem 4. Vorwärtsgang. Bei dem 4. Vorwärtsgang ist das vierte Schaltelement D geschlossen und der Kraft- und Dremomentfluss geht über die von dem dritten Planetenradsatz PG3 bereitgestellte Übersetzung. Zum Blockumlauf an dem dritten Planetenradsatz PG3 wird das siebte Schaltelement J in allen Gängen außer dem 4.Vorwärtsgang betätigt bzw. geschlossen.

Im 6. Vorwärtsgang kann in einer weiteren Ausführungsform des Getriebes gemäß Fig. 4a anstelle des dritten Schaltelements C auch das vierte Schaltelement D geschlossen werden bzw. geschlossen bleiben. Der Blockumlauf erzeugt immer eine Übersetzung von 1. Wenn der 4. Vorwärtsgang benötigt wird, muss das Sonnenrad 103 des dritten Planetenradsatzes PG3 mit dem achten Schaltelement K gebremst werden. Das siebte Schaltelement J kann in noch einer weiteren nicht dargestellten Ausführungsform des Getriebes auch derart ausgebildet sein, dass es das Sonnenrad 103 des dritten Planetenradsatzes PG3 mit dem Steg 123 des dritten Planetenradsatzes PG3 verbindet. Ein Vorteil des Getriebes gemäß Fig. 4a ist es, dass durch den Blockumlauf an dem dritten Planetenradsatz PG3 Schleppverluste durch lastfrei abwälzende Zahnräder sowie drehende Planetenräder und deren Planetenradlagerung bei dem dritten Planetenradsatz PG3 vermieden werden.

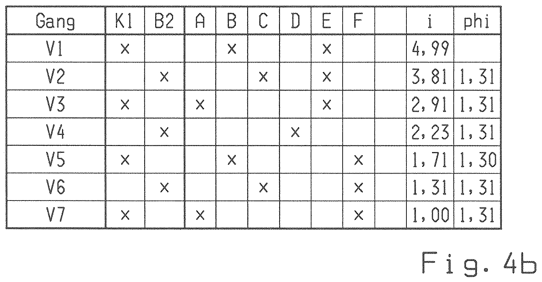

Fig. 4b zeigt ein Übersetzungsschema für ein Getriebe gemäß Fig. 4a.

In Fig. 4b ist beispielhaft eine Schaltmatrix des Getriebes gemäß Fig. 4a gezeigt. In der in Fig. 4b gezeigten Schaltmatrix sind nur Kreuze für diejenigen der Schaltelemente, d.h. die Schaltelemente A-F, die Kupplung K1 und die Bremse B2, gesetzt, die für den jeweiligen der Vorwärtsgänge V1-V7, notwendig sind und in diesem Gang betätigt bzw. geschlossen werden. Es können aber auch weitere Schaltelemente betätigt bzw. geschlossen werden, um einen Gang in dem anderen Teilgetriebe vorzuwählen oder um an allen Wellen definierte Drehzahlverhältnisse herzustellen usw.. In der vorletzten Spalte der Schaltmatrix sind beispielhaft die Gangübersetzungen i der geschalteten Vorwärtsgänge V1-V7 angegeben. In der letzten Spalte der Schaltmatrix ist wiederum das daraus resultierende Übersetzungsverhältnis phi des nächstniedrigeren Vorwärtsgangs zu dem betreffenden Vorwärtsgang V1-V7 angegeben. Mittels des Getriebes gemäß Fig. 4a sind somit mindestens 7 Vorwärtsgänge darstellbar.

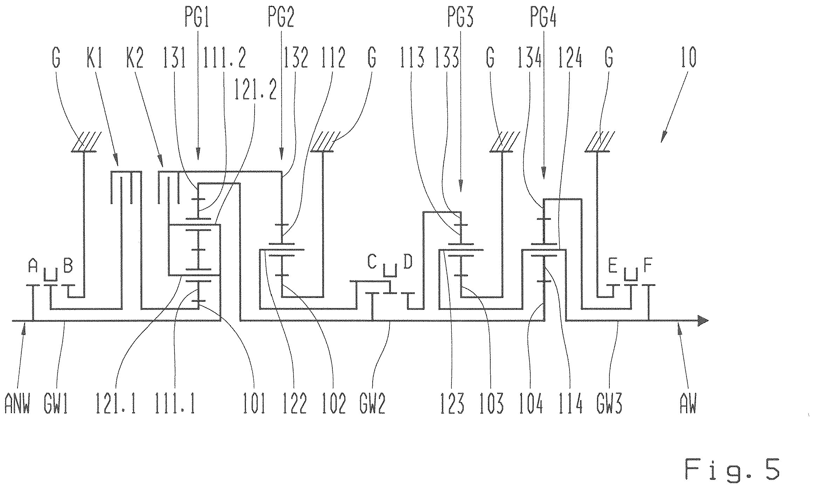

Fig. 5 zeigt ein Getriebe gemäß einer fünften Ausführungsform der vorliegenden Erfindung.

Hierbei zeigt Fig. 5 eine Variante des Mehrstufengetriebes gemäß Fig. 1a. Das Mehrstufengetriebe 10 in Fig. 5 entspricht in seinem Aufbau im Wesentlichen dem Getriebe 1 gemäß Fig. 1a, so dass auf die Beschreibung hierzu in Fig. 1a-1c verwiesen wird.

Das Getriebe 10 wie es in Fig. 5 dargestellt ist, weist eine zweite Kupplung K2 auf im Gegensatz zu dem Getriebe 1 gemäß Fig. 1a. Die zweite Kupplung K2 ist in der in Fig. 5 gezeigten Ausführungsform im Kraft- und Drehmomentfluss zwischen dem Steg 121.1 bzw. 121.2 und dem Hohlrad 132 des zweiten Planetenradsatzes PG2 angeordnet. Die zweite Kupplung K2 verbindet, wenn sie betätigt oder geschlossen ist, die beiden drehfest miteinander verbundenen Stege 121.1 und 121.2 des ersten Planetensatzes PG1 mit dem Hohlrad 132 des zweiten Planetensatzes PG2.

Der Kraft- und Drehmomentfluss über das zweite Teilgetriebe TG2 kann anstelle der Bremse B2 an dem Sonnenrad 102 des zweiten Planetenradsatzes PG2, wie bei dem Getriebe 1 gemäß Fig. 1a, in dem Ausführungsbeispiel in Fig. 5 auch mit der zweiten Kupplung K2 geschaltet werden. Die zweite Kupplung K2 verbindet dabei die Antriebswelle ANW, die drehfest mit den beiden Stegen 121.1 und 121.2 des ersten Planetenradsatzes PG1 verbunden ist, mit der Eingangswelle des Teilgetriebes TG2 bzw. dem Hohlrad 132 des zweiten Planetenradsatzes PG2.

Unterschiede gibt es bei der Auslegung des Reibschaltelements, d.h. der zweiten Kupplung K2, im Vergleich zu einer Bremse B2. Es liegen jeweils andere Drehmoment-Stützfaktoren und andere Differenzdrehzahlen am Schaltelement vor. Die entsprechende Schaltmatrix bleibt gleich, nur dass anstelle der Bremse B2 nun die Kupplung K2 geschlossen werden muss.

Bei einer nicht dargestellten Variante des in Fig. 5 gezeigten Getriebes, ist die zweite Kupplung K2 zwischen dem Steg 122 des zweiten Planetenradsatzes PG2 und dem zweiten Doppelschaltelement C/D angeordnet. Es liegen dann wieder andere Drehmoment-Stützfaktoren und andere Differenzdrehzahlen am jeweiligen Schaltelement vor.

In noch einer weiteren nicht dargestellten Variante des in Fig. 5 gezeigten Getriebes, ist die erste Kupplung K1 zwischen dem Hohlrad 131 des ersten Planetenradsatzes PG1 und dem Sonnenrad 104 des vierten Planetenradsatzes PG4 angeordnet, jedoch noch drehmomenttechnisch vor dem dritten Schaltelement C. Die erste Kupplung K1 ist in diesem Fall innenliegend angeordnet. Des Weiteren würde ein höherer Drehmomentstützfaktor erzeugt.

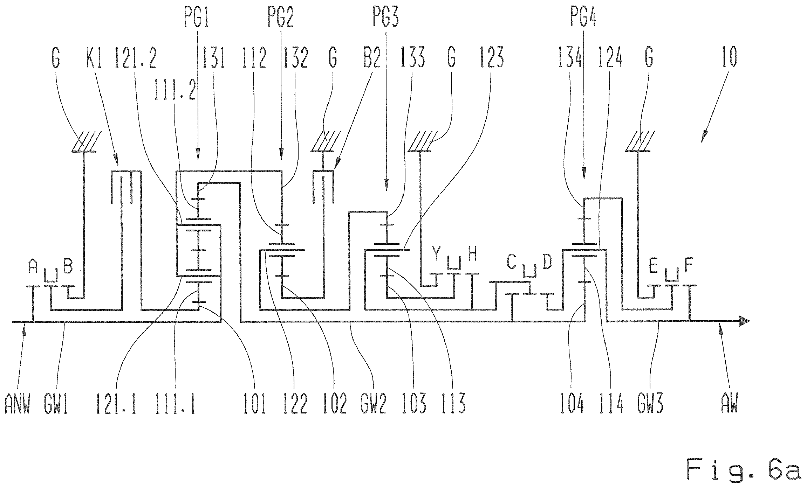

Fig. 6a zeigt ein Getriebe gemäß einer sechsten Ausführungsform der vorliegenden Erfindung.

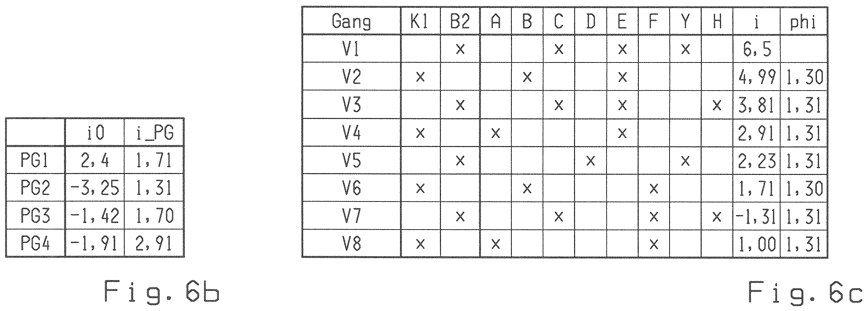

In Fig. 6a ist eine weitere Ausführungsform basierend auf dem Getriebe 1 gemäß Fig. 1a gezeigt, wobei das Mehrstufengetriebe 10 in Fig. 6a beispielsweise als ein 8-Gang DD (Direct drive, d.h. der höchste Gang ist ein Direktgang) Doppelkupplungsgetriebe ausgeführt sein kann. Der bisherige Radsatz des 7-Gang-DD-Getriebes, wie er beispielsweise in Fig. 1a gezeigt ist, wird mit einem zusätzlichen vierten Doppelschaltelement Y/H zu einem 8-Gang DD Getriebe erweitert. Das Doppelschaltelement Y/H fasst dabei ein siebtes Schaltelement Y und ein achtes Schaltelement H zusammen. Im Vergleich zum 7-Gang-DD-Getriebe mit sieben Vorwärtsgängen kommt ein zusätzlicher kurzer Vorwärtsgang hinzu. Die Übersetzung wird durch das zweite Teilgetriebe TG2 bereitgestellt. Es wirken dabei der zweite, dritte und vierte Planetenradsatz PG2, PG3 und PG4 für den neuen 1. Vorwärtsgang zusammen, wie auch in nachfolgender Schaltmatrix in Fig. 6c gezeigt ist.

Wie in Fig. 6a dargestellt ist, ist der Steg 122 des zweiten Planetenradsatzes PG2 mit dem Hohlrad 133 des dritten Planetenradsatzes drehfest verbunden. Das Sonnenrad 103 des dritten Planetenradsatzes PG3 ist mittels des siebten Schaltelements Y mit dem Gehäuse G verbindbar. Mittels des achten Schaltelements H des Doppelschaltelements Y/H ist wiederum das Sonnenrad 103 des dritten Planetenradsatzes PG3 mit dem Steg 123 des dritten Planetenradsatzes PG3 koppelbar. Der Steg 123 des dritten Planetenradsatzes PG3 wird, wenn das dritte Schaltelement C betätigt oder geschlossen ist, mit der zweiten Getriebewelle GW2 und dem mit der zweiten Getriebewelle GW2 drehfest verbundenen Sonnenrad 104 des vierten Planetenradsatzes PG4 verbunden. Ist dagegen das vierte Schaltelement D des zweiten Doppelschaltelements C/D betätigt oder geschlossen, so wird der Steg 123 des dritten Planetenradsatzes PG3 mit dem Steg 124 des vierten Planetenradsatzes PG4 verbunden, welcher wiederum drehfest mit der dritten Getriebewelle GW3 hier in Form der Abtriebswelle AW verbunden ist.

Fig. 6b zeigt ein Übersetzungsschema für ein Getriebe gemäß Fig. 6a.

Fig. 6b zeigt hierbei beispielhaft eine Übersetzungstabelle für Übersetzungen der vier Planetenradsätze PG1-PG4 des Getriebes gemäß Fig. 6a. Hierbei ist eine jeweilige Standgetriebeübersetzung i0 für die Planetenradsätze PG1-PG4 und eine jeweilige Übersetzung des Planetenradsatz i_PG für die Planetenradsätze PG1-PG4 angegeben.

Fig. 6c zeigt eine Schaltmatrix für ein Getriebe gemäß Fig. 6a.

In Fig. 6c ist eine beispielhafte Schaltmatrix des Getriebes gemäß Fig. 6a gezeigt. In der in Fig. 6c gezeigten Schaltmatrix sind nur Kreuze für diejenigen der Schaltelemente, d.h. die vier Doppelschaltelemente A/B, C/D, E/F und Y/H, die Kupplung K1 und die Bremse B2, gesetzt, die für den jeweiligen der Vorwärtsgänge V1-V8 notwendig sind und in dem jeweiligen Gang betätigt bzw. geschlossen werden. Es können aber auch weitere Schaltelemente betätigt bzw. geschlossen werden, um einen Gang in dem anderen Teilgetriebe vorzuwählen oder um an allen Wellen definierte Drehzahlverhältnisse herzustellen usw.. In der vorletzten Spalte der Schaltmatrix sind ebenfalls beispielhaft die Gangübersetzungen i der geschalteten Vorwärtsgänge V1-V8 angegeben. In der letzten Spalte der Schaltmatrix ist außerdem das daraus resultierende Übersetzungsverhältnis phi des nächstniedrigeren Vorwärtsgangs zu dem betreffenden Vorwärtsgang V1-V8 angegeben.

Bei dem 7. Vorwärtsgang V7 kann in einer Variante des Getriebes anstelle des dritten Schaltelements C auch das vierte Schaltelement D geschlossen werden. In diesem Fall ist das sechste Schaltelement F lastfrei.

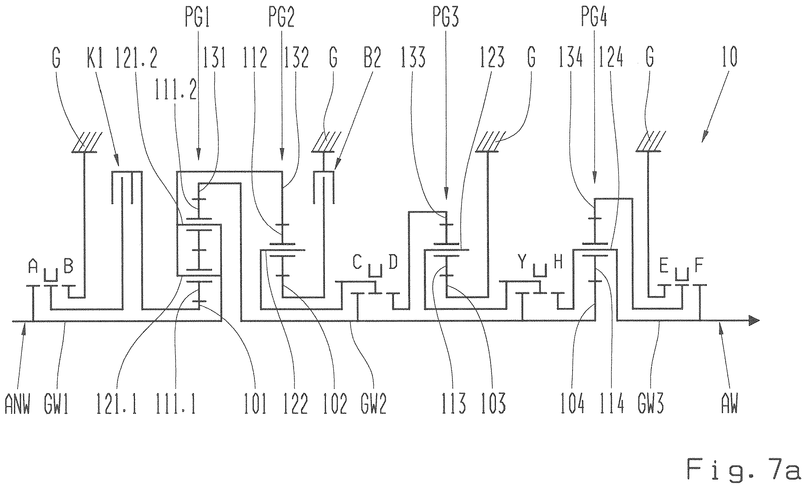

Fig. 7a zeigt ein Getriebe gemäß einer siebten Ausführungsform der Erfindung.

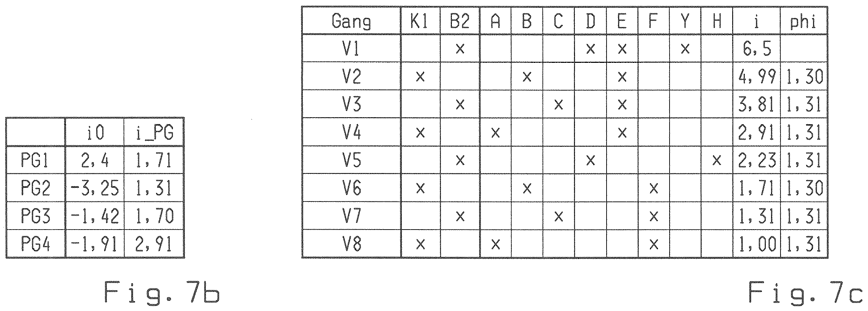

Fig. 7a stellt hierbei eine weitere Ausführungsform basierend auf dem Getriebe gemäß Fig. 1a dar. Das Mehrstufengetriebe 10 in Fig. 7a kann wie das Mehrstufengetriebe in Fig. 6a als ein 8-Gang-DD (Direct drive, d.h. der höchste Gang ist ein Direktgang) Doppelkupplungsgetriebe ausgebildet sein. Der bisherige Radsatz des 7-Gang-DD-Getriebes, wie er beispielsweise in Fig. 1a gezeigt ist, wird mit dem zusätzlichen vierten Doppelschaltelement Y/H zu einem 8-Gang DD Getriebe erweitert. Im Vergleich zu dem 7-Gang DD Getriebe kommt ein zusätzlicher kurzer Vorwärtsgang hinzu. Die Übersetzung wird durch das zweite Teilgetriebe TG2 bereitgestellt. Es wirken dabei der zweite, dritte und vierte Planetenradsatz PG2, PG3 und PG4 für den neuen 1. Vorwärtsgang zusammen, wie auch in nachfolgender Schaltmatrix in Fig. 7c gezeigt ist.

Das Getriebe wie es in Fig. 7a dargestellt ist, weist eine andere Anordnung der dritten und vierten Doppeltschaltelemente C/D und Y/H auf, im Vergleich zu dem zuvor in Fig. 6a gezeigten Getriebe. Der Steg 123 des dritten Planetenradsatzes PG3 wird, wenn das siebte Schaltelement Y betätigt bzw. geschlossen ist, mit dem Sonnenrad 104 des vierten Planetenradsatzes PG4 verbunden. Das Sonnenrad 104 ist hierbei drehfest mit dem Hohlrad des ersten Planetenradsatzes PG1 über die zweite Getriebewelle GW2 verbunden. Ist dagegen das achte Schaltelement H des Doppelschaltelements Y/H betätigt bzw. geschaltet, so wird der Steg 123 des dritten Planetenradsatzes PG3 mit dem Steg 124 des vierten Planetenradsatzes PG4 verbunden. Dieser Steg 124 ist wiederum drehfest mit der dritten Getriebewelle GW3, hier in Form der Abtriebswelle AW verbunden.

Fig. 7b zeigt ein Übersetzungsschema für ein Getriebe gemäß Fig. 7a.

In Fig. 7b ist beispielhaft eine Übersetzungstabelle für Übersetzungen der vier Planetenradsätze PG1-PG4 des Getriebes gemäß Fig. 7a dargestellt. Dabei ist eine jeweilige Standgetriebeübersetzung i0 für die Planetenradsätze PG1-PG4 und eine jeweilige Übersetzung des Planetenradsatz i_PG für die Planetenradsätze PG1-PG4 angegeben.

Fig. 7c zeigt eine Schaltmatrix für ein Getriebe gemäß Fig. 7a.

In Fig. 7c ist beispielhaft eine Schaltmatrix des Getriebes gemäß Fig. 7a gezeigt. In der in Fig. 7c gezeigten Schaltmatrix sind nur Kreuze für diejenigen der Schaltelemente, d.h. die vier Doppelschaltelemente A/B, C/D, E/F und Y/H, die Kupplung K1 und die Bremse B2, gesetzt, die für den jeweiligen der Vorwärtsgänge V1-V8 notwendig sind und in diesem Gang betätigt bzw. geschlossen werden. Es können aber auch weitere Schaltelemente betätigt bzw. geschlossen werden, um einen Gang in dem anderen Teilgetriebe vorzuwählen oder um an allen Wellen definierte Drehzahlverhältnisse herzustellen usw.. In der vorletzten Spalte der Schaltmatrix sind beispielhaft die Gangübersetzungen i der geschalteten Vorwärtsgänge V1-V8 angegeben. In der letzten Spalte der Schaltmatrix ist außerdem das daraus resultierende Übersetzungsverhältnis phi des nächstniedrigeren Vorwärtsgangs zu dem betreffenden Vorwärtsgang V1-V8 angegeben. Mittels des Getriebes gemäß Fig. 7a sind somit mindestens 8 Vorwärtsgänge darstellbar.

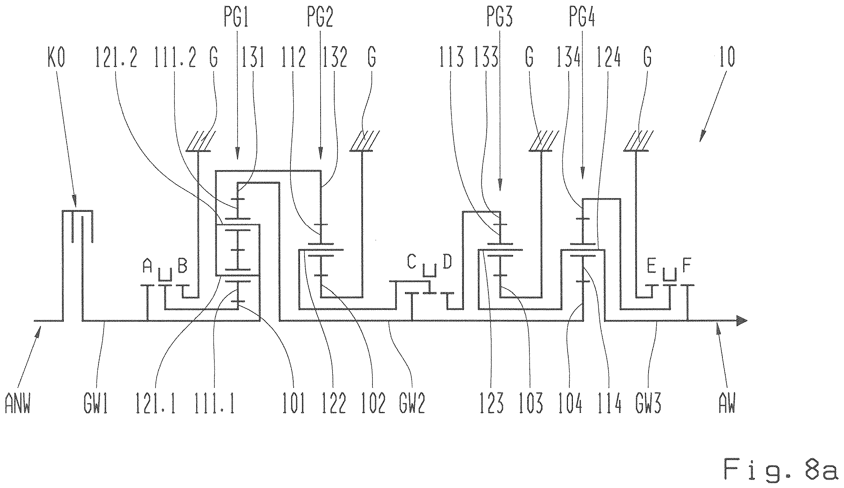

Fig. 8a zeigt ein Getriebe gemäß einer achten Ausführungsform der Erfindung.

In Fig. 8a ist noch eine weitere Ausführungsform eines Getriebes 10 basierend auf dem Getriebe 1 gemäß Fig. 1a gezeigt. Das Mehrstufengetriebe 10 in Fig. 8a kann, wie das Mehrstufengetriebe in Fig. 1a, als ein 7-Gang DD (Direct drive, d.h. der höchste Gang ist ein Direktgang) Doppelkupplungsgetriebe ausgebildet sein und genauer beispielsweise als ein automatisiertes Schaltgetriebe (AMT).

Das Mehrstufengetriebe 10 gemäß Fig. 8a unterscheidet sich von dem Getriebe 1 gemäß Fig. 1a dadurch, dass die beiden Lastschaltelemente K1 und B2 in Fig. 1a bzw. entsprechend das Lastschaltelement K2 in Fig. 5 durch feste Verbindungen ersetzt werden. Dadurch entsteht ein nicht lastschaltbares, automatisiertes Schaltgetriebe (AMT). Schaltungen sind dann nur mit Zugkraftunterbrechungen möglich. Des Weiteren wird eine Trennkupplung K0 als herkömmliche Anfahrkupplung vorgesehen.

Wie in Fig. 8a gezeigt ist, ist das Sonnenrad 101 des ersten Planetenradsatzes PG1 direkt mittels des ersten Doppelschaltelements A/B koppelbar, statt wie in Fig. 1a eine Kupplung K1 zum Verbinden des Sonnenrads 101 mit dem ersten Doppelschaltelement A/B vorzusehen. Des Weiteren ist das Sonnenrad 102 des zweiten Planetenradsatzes PG2 mit dem Gehäuse G verbunden und somit gehäusefest, statt wie in Fig. 1a mittels der Bremse B2 mit dem Gehäuse G verbindbar zu sein. Mittels einer Trennkupplung K0 wird, wenn diese betätigt oder geschlossen ist, ein Antriebsmotor mit der Eingangswelle des Getriebes 1 verbunden. Die Eingangswelle oder erste Getriebewelle GW1 ist dabei drehfest mit den beiden Stegen 111.1 und 111.2 des ersten Planetenradsatzes PG1 verbunden.

Bei dem Getriebe gemäß Fig. 8a fehlt der Rückwärtsgang bzw. kurz R-Gang. Es kann daher eine zusätzliche Baugruppe bereitgestellt werden, beispielsweise eine Kombination mit einer Bereichsgruppe mit integriertem Rückwärtsgang bzw. einer Rückwärtsgangstufe.

Die in Fig. 8a gezeigte Ausführungsform des Getriebes hat den Vorteil eines kostengünstigen Getriebes. Des Weiteren kann der Wirkungsgrad durch den Wegfall der Lastschaltelemente gesteigert werden. Außerdem ist eine Nutzung des Hauptgetriebes als Baukasten z.B. für ein Lastschaltgetriebe (DCT-ähnlich) oder als automatisiertes Schaltgetriebe mit Zugkraftunterbrechung möglich.

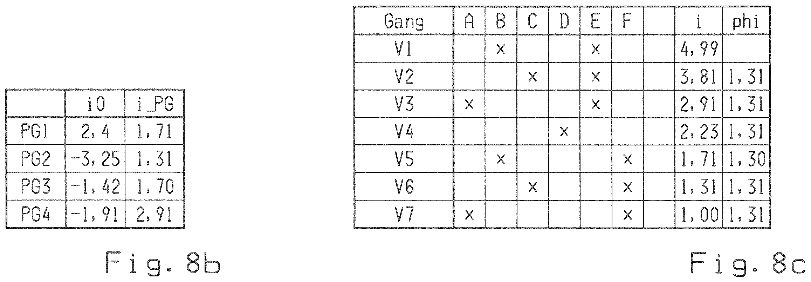

In einer nicht dargestellten Variante des in Fig. 8a gezeigten Getriebes wird anstelle des gehäusefesten Sonnenrads 103 des dritten Planetenradsatzes PG3 ein gemeinsames Bauteil aus dem Sonnenrad 103 des dritten Planetenradsatzes PG3 und dem Hohlrad 134 des vierten Planetenradsatzes PG4 angeordnet. Dies ist besonders sinnvoll bei einer Schachtelung des dritten und vierten Planetenradsatzes PG3 und PG4 und hat den Vorteil, dass ein Blockumlauf bei dem dritten Planetenradsatz PG3 möglich ist, wenn das sechste Schaltelement F geschlossen ist. In diesem Fall treten keine Lagerverluste bei den Planeten 113 des dritten Planetenradsatzes PG3 auf. Eine vorbereitende Hintergrundschaltung durch das fünfte Schaltement E und das sechste Schaltelement F ist nicht mehr möglich, was eine längere Schaltdauer von dem 4. Vorwärtsgang V4 auf den 5. Vorwärtsgang V5 bewirkt. Bei der in nachfolgender Fig. 8c gezeigten Schaltmatrix muss im 4. Vorwärtsgang V4 das fünfte Schaltelement E geschlossen bleiben, um das Sonnenrad 103 gehäusefest zu halten.

Fig. 8b zeigt eine Übersetzungsmatrix für ein Getriebe gemäß Fig. 8a.

Fig. 8b zeigt beispielhaft eine Übersetzungstabelle für Übersetzungen der vier Planetenradsätze PG1-PG4 des Getriebes gemäß Fig. 8a. Dabei ist eine jeweilige Standgetriebeübersetzung i0 für die Planetenradsätze PG1-PG4 und eine jeweilige Übersetzung des Planetenradsatz i_PG für die Planetenradsätze PG1-PG4 angegeben.

Fig. 8c zeigt eine Schaltmatrix für ein Getriebe gemäß Fig. 8a.

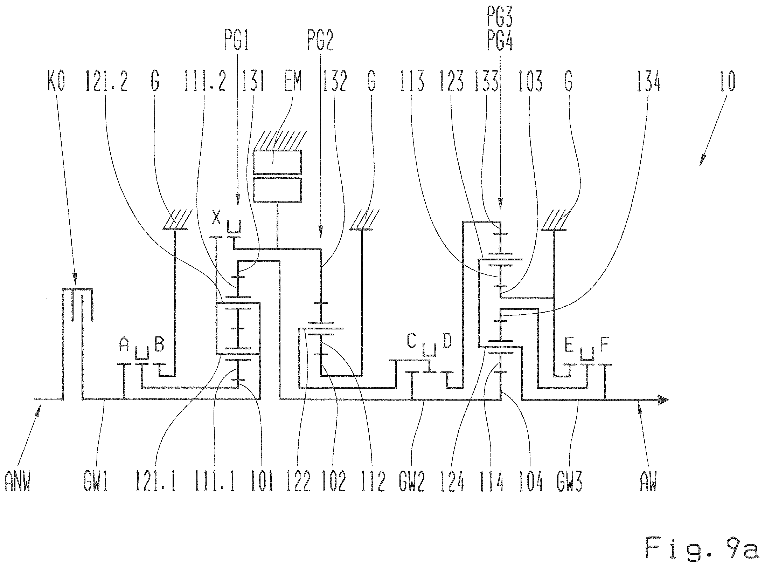

In Fig. 8c ist beispielhaft eine Schaltmatrix des Getriebes 10 gemäß Fig. 8a gezeigt. In der in Fig. 8c gezeigten Schaltmatrix sind nur Kreuze für diejenigen der Schaltelemente, d.h. die drei Doppelschaltelemente A/B, C/D und E/F und die Kupplung K0, gesetzt, die für den jeweiligen der Vorwärtsgänge V1-V7 notwendig sind und in diesem Gang betätigt bzw. geschlossen werden. In der vorletzten Spalte der Schaltmatrix sind beispielhaft die Gangübersetzungen i der geschalteten Vorwärtsgänge V1-V7 angegeben. Außerdem ist in der letzten Spalte der Schaltmatrix das daraus resultierende Übersetzungsverhältnis phi des nächstniedrigeren Vorwärtsgangs zu dem betreffenden Vorwärtsgang V1-V7 angegeben. Mittels des Getriebes gemäß Fig. 8a sind somit mindestens 7 Vorwärtsgänge darstellbar. Fig. 9a zeigt ein Getriebe gemäß einer neunten Ausführungsform der vorliegenden Erfindung.

In Fig. 9a ist noch ein weiteres Mehrstufengetriebe 10 dargestellt. Das Mehrstufengetriebe 10 stellt dabei eine Variante des Getriebes 10 gemäß Fig. 2 dar. Das Mehrstufengetriebe 10 entspricht in seinem Aufbau im Wesentlichen dem Getriebe gemäß Fig. 2, so dass bezüglich des Aufbaus des Mehrstufengetriebes 10 auf die Beschreibung zu Fig. 2 und damit verbunden auch auf die Beschreibung zu den Fig. 1a-1c verwiesen wird. Das in Fig. 9a gezeigte Getriebe 10 ist ein Hybridgetriebe, welches eine Variante des 7-Gang DD Getriebes in Planetenbauweise darstellt und eine zusätzlich elektrische Zugkraftunterstützung mittels einer elektrischen Maschine EM aufweist.

Das Mehrstufengetriebe 10 gemäß Fig. 9a unterscheidet sich von dem Getriebe 10 gemäß Fig. 2 dadurch, dass die erste Kupplung K1 entfällt. Stattdessen wird eine Trennkupplung K0, wie zuvor in Fig. 8a vorgesehen. Die Trennkupplung K0 dient als herkömmliche Anfahrkupplung und verbindet einen Antriebsmotor oder Verbrennungsmotor mit der Eingangswelle des Getriebes 10. Die Kopplung des Antriebsmotors an das erste Teilgetriebe TG1 erfolgt in dem Ausführungsbeispiel in Fig. 9a alleine durch das erste und zweite Schaltelement A und B. Diese sind z.B. in dem ersten Doppelschaltelement A/B zusammengefasst.

Des Weiteren wird die Bremse B2 in Fig. 1a bzw. die entsprechende Kupplung K2 in Fig. 5, in der in Fig. 9a gezeigten Getriebevariante durch ein zusätzliches Schaltelement X ersetzt. Ist das zusätzliche Schaltelement X betätigt oder geschlossen, so verbindet es die Eingangswelle und die mit ihr drehfest verbundenen Stege 111.1, 111.2 des ersten Planentenradsatzes PG1 mit dem Hohlrad 132 des zweiten Planetenradsatzes PG2. Es erfolgt eine Kopplung des Antriebsmotors an das zweite Teilgetriebe TG2. Außerdem ist eine elektrische Maschine EM für eine Lastschaltung angeordnet. Hierbei erfolgt eine Zugkraftstützung durch die elektrische Maschine EM immer über das zweite Teilgetriebe TG2. Bei einer Schaltung in dem zweiten Teilgetriebe TG2 erhält der Antriebsmotor eine Zugkraft über das erste Teilgetriebe TG1. Dies bedeutet, dass immer nur abwechselnd zwischen dem ersten Teilgetriebe TG1 und dem zweiten Teilgetriebe TG2 geschaltet wird.

Ein Rückwärtsgang bzw. R-Gang bzw. Rückwärtsgangstufe ist verzichtbar, indem zum Rückwärtsfahren die elektrische Maschine EM verwendet wird, insebsondere in dem diese im Vorwärtsgang rückwärtsdreht.

Die Reib-Trennkupplung K0 ist optional. Sie kann als Anfahrkupplung vorgesehen werden, wenn die elektrische Maschine EM zu schwach oder der Energiespeicher oder elektrische Speicher der elektrischen Maschine EM leer ist. Die Trennkupplung K0 dient zum Öffnen bei Getriebesynchronisation. Die Schaltung erfolgt dann wie bei einem automatisierten Schaltgetriebe in dem ersten Teilgetriebe TG1. Das zweite Teilgetriebe TG2, d.h. das zweite Doppelschaltelement C/D, wird immer durch die Drehzahlregelung der elektrischen Maschine EM synchronisiert.

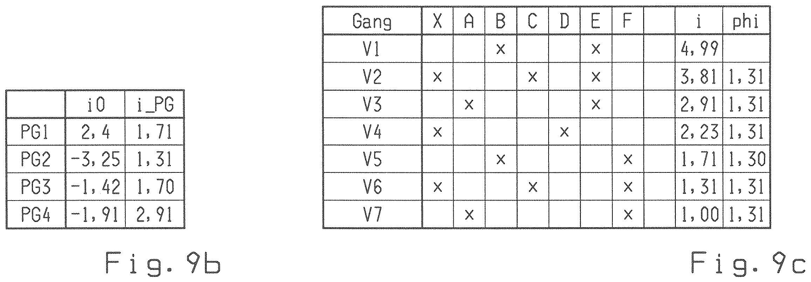

Fig. 9b zeigt ein Übersetzungsschema für ein Getriebe gemäß Fig. 9a.

In Fig. 9b ist beispielhaft eine Übersetzungstabelle für Übersetzungen der vier Planetenradsätze PG1-PG4 des Getriebes gemäß Fig. 9a dargestellt. Dabei ist eine jeweilige Standgetriebeübersetzung i0 für die Planetenradsätze PG1-PG4 und eine jeweilige Übersetzung des Planetenradsatz i_PG für die Planetenradsätze PG1-PG4 angegeben.

Fig. 9c zeigt eine Schaltmatrix für ein Getriebe gemäß Fig. 9a.

In Fig. 9c ist beispielhaft eine Schaltmatrix für ein Getriebe gemäß Fig. 9a gezeigt. In der in Fig. 9c gezeigten Schaltmatrix sind nur Kreuze für diejenigen der Schaltelemente, d.h. die drei Doppelschaltelemente A/B, C/D, E/F und das zusätzliche Schaltelement X sowie die Kupplung K0, gesetzt, die für den jeweiligen der Vorwärtsgänge V1-V7 notwendig sind und in diesem Gang betätigt bzw. geschlossen werden. In der vorletzten Spalte der Schaltmatrix sind beispielhaft die Gangübersetzungen i der geschalteten Vorwärtsgänge V1-V7 angegeben. Außerdem ist in der letzten Spalte der Schaltmatrix das daraus resultierende Übersetzungsverhältnis phi des nächstniedrigeren Vorwärtsgangs zu dem betreffenden Vorwärtsgang V1-V7 angegeben. Mittels des Getriebes gemäß Fig. 9a sind somit mindestens 7 Vorwärtsgänge V1-V7 darstellbar.

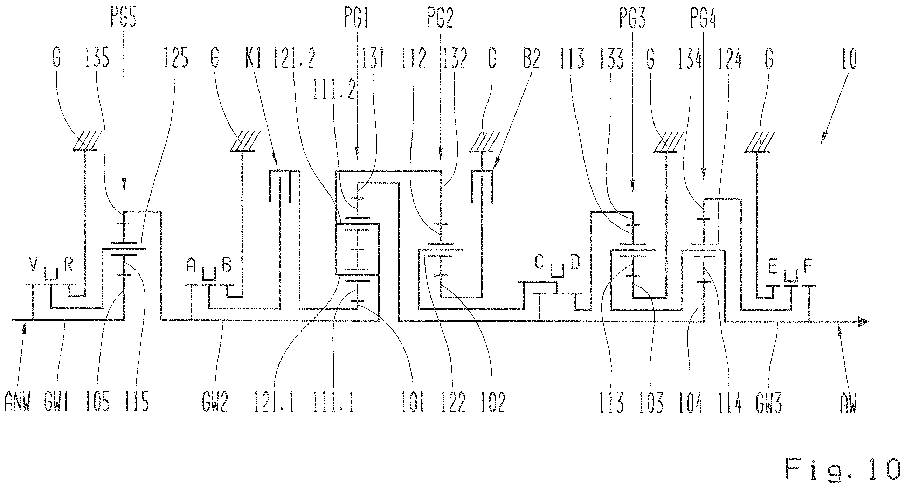

Fig. 10 zeigt ein Getriebe gemäß einer zehnten Ausführungsform der vorliegenden Erfindung.

Fig. 10 zeigt hierbei noch ein weiteres Mehrstufengetriebe 10. Das Mehrstufengetriebe 10 stellt dabei eine weitere Variante des Getriebes 1 gemäß Fig. 1a dar. Das Mehrstufengetriebe 10 entspricht in seinem Aufbau im Wesentlichen dem Getriebe 1 gemäß Fig. 1a, so dass bezüglich des Aufbaus des Mehrstufengetriebes 10 auf die Beschreibung in Fig. 1a-1c verwiesen wird. Das Getriebe 10 in Fig. 10 stellt eine Variante mit mindestens einem Rückwärtsgang bzw. Rückwärtsgangstufe als Wendesatz PG5 am Getriebeeingang dar.

Das Getriebe 10 gemäß dem Ausführungsbeispiel in Fig. 10 weist im Gegensatz zu dem Mehrstufengetriebe 1 gemäß Fig. 1a einen zusätzlichen fünften Planetenradsatz PG5 und zwei zusätzliche Schaltelemente V und R auf, welche z.B. in einem Doppelschaltelement V/R zusammengefasst sind. Ist das Schaltelement R betätigt, so verbindet es den Steg 125 des fünften Planetenradsatzes PG5 mit dem Gehäuse G, so dass der Steg 125 gehäusefest ist, um mindestens einen Rückwärtsgang bereitzustellen. Ist dagegen das Schaltelement V betätigt, so verbindet es den Steg 125 des fünften Planetenradsatzes PG5 mit der Antriebswelle ANW und dem mit der Antriebswelle ANW drehfest verbundenen Sonnenrad 105 des fünften Planetenradsatzes PG5 für einen Vorwärtsgang.

Zur Darstellung eines Vorwärtsgangs des Getriebes 10 ist immer das Schaltelement V betätigt oder geschlossen und zur Darstellung eines Rückwärtsgang des Getriebes 10 ist immer das Schaltelement R betätigt oder geschlossen. Die Rückwärtsgänge sind kürzer als die entsprechenden Vorwärtsgänge (Faktor i0 des fünften Planetenradsatzes PG5). In den kurzen Rückwärtsgängen kann eine Momentbegrenzung des Antriebsmotors notwendig sein, da sonst aufgrund der Momentbelastung der Rückwärtsgang auslegungsrelevant für das Getriebe würde. Die kurzen Rückwärtsgänge erweisen sich als vorteilhaft zum feinfühligen Rückwärtsrangieren. Es wird eine geringe Fahrgeschwindigkeit beim Leerlauf des Antriebsmotors bei geschlossener Kupplung erzeugt. Die Rückwärtsgänge sind des Weiteren untereinander lastschaltbar.

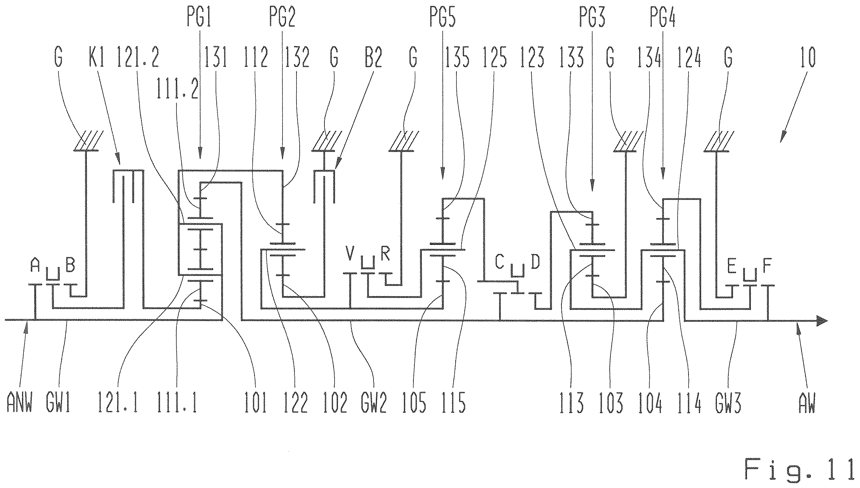

Fig. 11 zeigt ein Getriebe gemäß einer elften Ausführungsform der vorliegenden Erfindung.

In Fig. 11 ein anderes Mehrstufengetriebe 10 gezeigt, welches eine Variante des Getriebes 1 gemäß Fig. 1a darstellt. Das Mehrstufengetriebe 10 entspricht in seinem Aufbau im Wesentlichen dem Getriebe 1 gemäß Fig. 1a, so dass bezüglich des Aufbaus des Mehrstufengetriebes 10 auf die Beschreibung in Fig. 1a-1c verwiesen wird. Das in Fig. 11 gezeigte Getriebe 10 stellt eine Variante mit einem Rückwärtsgang als Wendesatz PG5 innerhalb des Teilgetriebes TG2 dar.

Das Getriebe 10 gemäß dem Ausführungsbeispiel in Fig. 11 unterscheidet sich von dem Mehrstufengetriebe 1 gemäß Fig. 1a dadurch, dass es einen zusätzlichen fünften Planetenradsatz PG5 und zwei zusätzlichen Schaltelemente V und R aufweist, welche z.B. in einem vierten Doppelschaltelement V/R zusammengefasst sind. Der fünfte Planetenradsatz PG5 ist dabei als Wendesatz für den Rückwärtsgang innerhalb des zweiten Teilgetriebes TG2 angeordnet. Das Sonnenrad 105 des fünften Planetenradsatzes PG5 ist mit dem Steg 122 des zweiten Planetenradsatzes PG2 drehfest verbunden. Der Planet 115 des fünften Planetenradsatzes PG5 ist auf einem Steg 125 des fünften Planetenradsatzes PG5 drehbar gelagert. Der Steg 125 ist des Weiteren mittels des vierten Doppelschaltelements V/R koppelbar. Zum Bereitstellen eines Rückwärtsgangs ist mittels des achten Schaltelements R der Steg 125 des fünften Planetenradsatzes PG5 mit dem Gehäuse G verbindbar, so dass der Steg 125 gehäusefest ist,. Zum Bereitstellen eines Vorwärtsgangs ist mittels des siebten Schaltelements V der Steg 125 des fünften Planetenradsatzes PG5 mit dem Sonnenrad 105 des fünften Planetenradsatzes PG5 verbindbar.

Des Weiteren ist das Hohlrad 135 des fünften Planetenradsatzes PG5 mittels des zweiten Doppelschaltelements C/D koppelbar. Ist das dritte Schaltelement C betätigt, so verbindet es das Hohlrad 135 mit der zweiten Getriebewelle GW2 und dem mit der zweiten Getriebewelle GW2 drehfest verbundenen Sonnenrad 104 des vierten Planetenradsatzes PG4. Ist dagegen das vierte Schaltelement D betätigt, so verbindet es das Hohlrad 135 mit dem Hohlrad 133 des dritten Planetenradsatzes PG3.

In dem Vorwärtsgang des Getriebes 1 ist immer das Schaltelement V betätigt oder geschlossen und im Rückwärtsgang ist immer das Schaltelement R betätigt oder geschlossen. Die Rückwärtsgänge sind kürzer als die entsprechenden Vorwärtsgänge des zweiten Teilgetriebes TG2 (Faktor i0 des fünften Planetenradsatzes PG5). Die Rückwärtsgänge sind des Weiteren untereinander nicht lastschaltbar. Der Wechsel zwischen Vorwärts- und Rückwärtsgängen ist dagegen lastschaltbar, wenn in dem ersten Teilgetriebe TG1 ein Vorwärtsgang vorgewählt wird und in dem zweiten Teilgetriebe TG2 ein Rückwärtsgang vorgewählt wird. Dies ist zum dynamischen Reversieren bzw. Freischaukeln aus einer Mulde von Vorteil.

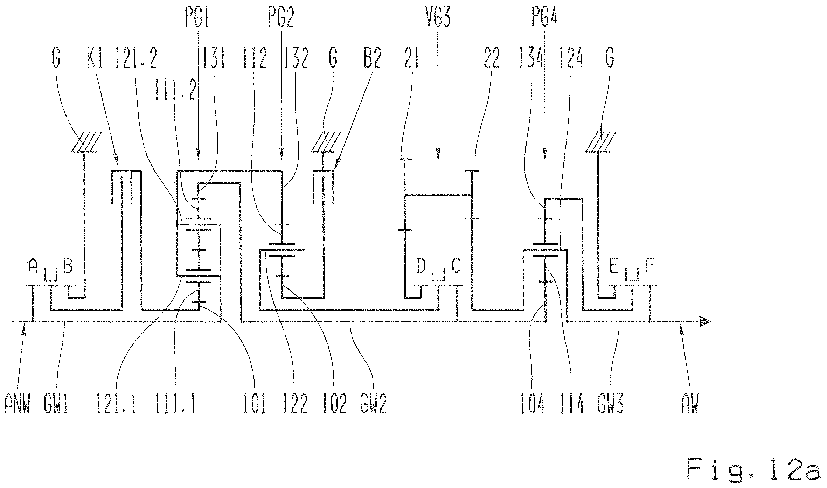

Fig. 12a zeigt ein Getriebe gemäß einer zwölften Ausführungsform der vorliegenden Erfindung.

In Fig. 12a ist noch eine weitere Variante des Mehrstufengetriebes gemäß Fig. 1a dargestellt. Das Mehrstufengetriebe 10 entspricht in seinem Aufbau im Wesentlichen dem Getriebe 1 gemäß Fig. 1a, so dass bezüglich des Aufbaus des Mehrstufengetriebes 10 auf die Beschreibung in den Fig. 1a-1c verwiesen wird.

Das in Fig. 12a dargestellten Getriebe 10 kann beispielsweise als ein 7-Gang Getriebe DD (Direct Drive) ausgebildet sein. Das Getriebe 10 unterscheidet sich von dem Getriebe 1 gemäß Fig. 1a dadurch, dass nur drei Planetenradsätze vorhanden sind, hier der erste, zweite und vierte Planetenradsatz PG1, PG2 und PG4. Der dritte Planetenradsatz PG3 entfällt dagegen. Stattdessen ist ein Vorgelege VG3 vorgesehen mit einer Vorgelegewelle VW1 und zwei Radebenen, insbesondere in Form von Stirnradstufen I u, II.

Die zuvor durch den dritten Planetenradsatz PG3 bereitgestellte Übersetzung von k², d.h. ein doppelter Gangsprung, wird nun durch die zwei Radebenen I und II des Vorgelege VG3 realisiert. Die Übersetzung des Vorgelege VG3 ist dabei ähnlich der des dritten Planetenradsatzes PG3, z.B. 1,7 über beide Radebenen I und II hinweg. Die Getriebewellen GW1, GW2, GW3 sind selektiv über die beiden Radebenen I, II und sechs Schaltelemente A, B, C, D, E und F, sowie die Kupplung K1 als weiterem Schaltelement, miteinander in Triebverbindung bringbar. Die erste Radebene I wird, wenn das vierte Schaltelement D betätigt oder geschlossen ist, mit dem Sonnenrad 104 bzw. der Getriebewelle GW2 verbunden. Die zweite Radebene II ist wiederum stets mit dem Steg 124 des vierten Planetenradsatzes PG4 bzw. der Getriebewelle GW3, welche die Abtriebswelle AW bildet, gekoppelt. Ist das dritte Schaltelement C des Doppelschaltelements C/D betätigt, so verbindet es den Steg 122 des zweiten Planetenradsatzes PG2 mit der zweiten Getriebewelle GW2 bzw. dem Sonnenrad 104 des vierten Planetenradsatzes PG4, welches drehfest mit der Getriebewelle GW2 verbunden ist.

Ein Vorteil des Getriebes gemäß Fig. 12a ist es, dass der dritte Planetenradsatz PG3 entfällt. Die Standgetriebeübersetzung i0 war im extremen Bereich. Dadurch ist eine höherer Gangsprung und insgesamt eine höhere Spreizung erzielbar. Durch den Wegfall des dritten Planetenradsatzes PG3 entfallen auch die damit verbundenen Lagerverluste. Da die Stege/Planetenträger des dritten Planetenradsatzes PG3 klein sein müssen, das bedeutet eine betragsmäßig extrem kleine Standgetriebeübersetzung i0 haben müssen, entstehen hohe Lagerdrehzahlen.

Das dritte und vierte Schaltelement C und D bzw. das zweite Doppelschaltelement C/D können als konventionelles Schaltelement ausgeführt werden. Das bedeutet, dass ein mittiges Element mit einem linken Nachbarn oder einem rechten Nachbarn verbunden wird. Dies ist besonders bauraumgünstig.

Das in Fig.12a gezeigte Vorgelege VG3 kann auch in einer nicht dargestellten Bauweise mit zwei Vorgelegewellen gestaltet werden. Die Leistungseinteilung ist dabei ähnlich wie bei einem Planetengetriebe mit festgehaltenem Steg. Vorteilhaft ist, dass hier die Radialkräfte auf der Hauptwelle ausgeglichen werden können.

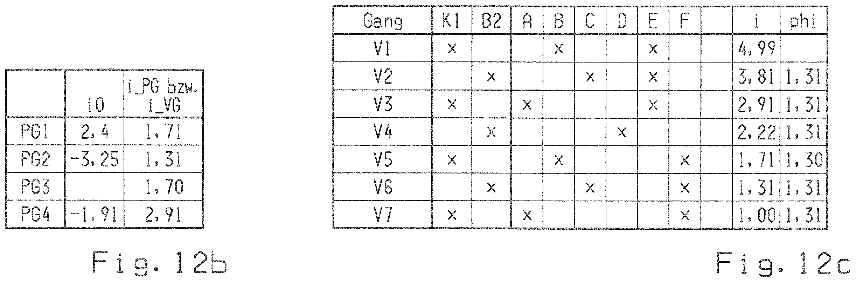

Fig. 12b zeigt ein Übersetzungsschemata für ein Getriebe gemäß Fig. 12a.

In Fig. 12b ist beispielhaft eine Übersetzungstabelle für Übersetzungen der drei Planetenradsätze, d.h. hier des ersten, zweiten und vierten Plantenradsatzes PG1, PG2 und PG4 des Getriebes 10 gemäß Fig. 12a dargestellt. Dabei ist eine jeweilige Standgetriebeübersetzung i0 für die Planetenradsätze PG1, PG2 und PG4 und eine jeweilige Übersetzung des Planetenradsatz i_PG für die Planetenradsätze PG1, PG2 und PG4 angegeben. Für das Vorgelegegetriebe VG3 ist des Weiteren die Übersetzung des Vorgelegegetriebes VG3 i_VG3 angegeben.

Fig. 12c zeigt eine Schaltmatrix für ein Getriebe gemäß der Fig. 12a.

In Fig. 12c ist eine Schaltmatrix für ein Getriebe gemäß Fig. 12a gezeigt. In der in Fig. 12c gezeigten Schaltmatrix sind nur Kreuze für diejenigen der Schaltelemente, d.h. die sechs Schaltelemente A-F, die Bremse B2 sowie die Kupplung K1, gesetzt, die für den jeweiligen der Vorwärtsgänge V1-V7 notwendig sind und in diesem Gang betätigt bzw. geschlossen werden. In der vorletzten Spalte der Schaltmatrix sind beispielhaft die Gangübersetzungen i der geschalteten Vorwärtsgänge V1-V7 angegeben. Außerdem ist in der letzten Spalte der Schaltmatrix das daraus resultierende Übersetzungsverhältnis phi des nächstniedrigeren Vorwärtsgangs zu dem betreffenden Vorwärtsgang V1-V7 angegeben. Mittels des Getriebes gemäß Fig. 12a sind somit mindestens 7 Vorwärtsgänge darstellbar.

In einer weiteren nicht dargestellten Variante des Getriebes gemäß Fig. 12a ist, sofern es die Bindbarkeit zulässt, der Minus-Planetenradsatz durch einen Plus-Planetenradsatz ersetzt. Um beispielsweise eine ähnlich gewünschte Übersetzung bereitzustellen, erfolgt hierbei eine entsprechende Anpassung der Anbindung, d.h., der Steg und das Hohlrad werden vertauscht.

In einer weiteren nicht dargestellten Variante des Getriebes gemäß Fig. 12a ist eine Planetenradstufe durch eine Vorgelegestufe ersetzt. Dies ist nicht nur z.B. für den dritten Planetenradsatze PG3 machbar, wie in Fig. 12a gezeigt ist, sondern auch z.B. für den zweiten Planetenradsatz PG2.

In einer anderen nicht dargestellten Variante des Getriebes gemäß Fig. 12a ist der Rückwärtsgang als Stirnradstufe vorgesehen, z.B. durch eine weitere Radebene bei der Vorgelege-Variante des dritten Planetenradsatzes PG3.

In noch einer weiteren nicht dargestellten Variante des Getriebes gemäß Fig. 12a entfallen die beiden Lastschaltelemente K1 und K2 (bzw. B2) wie bei der Variante des automatisierten Schaltgetriebes AMT in Fig. 7a. Die ersten und zweiten Doppelschaltelemente A/B und C/D sind dann als Lastschaltelemente für die Varianten des 7-Gang Getriebes DD ausgeführt. Es entstehen so Lastschaltgetriebe mit vier Lastschaltelementen und einer gemeinsam genutzten Gruppe, d.h. dem vierten Planetenradsatze PG4, die mit formschlüssigen Lastschaltelementen E/F lastfrei vorgewählt wird.

Zusammenfassend bietet die vorliegende Erfindung unter anderem die Vorteile, dass das Getriebe kompakt baut, was in niedrigeren Herstellungskosten und niedrigerem Gewicht des Getriebes resultiert. Darüber hinaus bietet das Getriebe eine gute Übersetzungsreihe, niedrige Trägheitsmassen, sowie eine hohe Leistungsdichte. Weiter bietet die vorliegende Erfindung eine hohe Anzahl von Gängen.

Des Weiteren sind die Schaltelemente in den zuvor beschriebenen Ausführungsformen der Erfindung einfach betätigbar, da vorzugsweise die meisten oder besonders bevorzugt alle Schaltelemente des Getriebes von außen zugänglich im Getriebe vorgesehen sind, insbesondere von außen durch Schaltgabeln.

### Bezugszeichen

- 1, 10: Getriebe
- GW1, GW2, GW3, GW4: Getriebewelle
- ANW: Antriebswelle
- AW: Abtriebswelle
- G: Gehäuse
- PG1, PG2, PG3, PG4, PG5, PG6: Planetenradsatz
- 101, 102, 103, 104, 105, 106: Sonnenrad
- 111.1, 111.2, 111, 112, 113, 114, 115, 116: Planet
- 121.1, 121.2, 122, 123, 124, 125, 126: Steg/Planetenträger
- 131, 132, 133, 134, 135, 136: Hohlrad
- VG3: Vorgelege
- VW1: Vorgelegewelle
- I, II: Radebene
- i0: Standgetriebeübersetzung
- i_PG: Übersetzung des Planetenradsatzes
- i_VG3: Übersetzung des Vorgegelgegetriebes
- k: Gangsprung
- A, B, C, D, E, F, H, J, K, L, V, R, X, Y: Schaltelement
- K1, K2, K0: Kupplung
- EM: elektrische Maschine
- V1, V2, V3, V4, V5, V6, V7, V8, V9, V10: Vorwärtsgang
- V11, V12, V13, V14 R1, R2, R3, R4, R5, R6, R7: Rückwärtsgang

## Patentansprüche

1. Getriebe (1, 10), insbesondere Mehrstufengetriebe, für ein Kraftfahrzeug, umfassend ein Gehäuse (G), eine Antriebswelle (ANW), eine Abtriebswelle (AW), zumindest zwei Planetenradsätze (PG1, PG4), wobei der erste Planentenradsatz (PG4) ein Sonnenrad (104), zumindest einen Planeten (114), einen Steg (124) und ein Hohlrad (134) umfasst, sowie mehrere Schaltelemente (A-F, H, J, K, L, V, R, X, Y) und einen zweiten Planetenradsatz (PG1) mit einem Sonnenrad (101), mindestens einem Planeten (111.1, 111.2 und einem Hohlrad (131), wobei ein Sonnenrad (101) des zweiten Planetenradsatzes (PG1) mittels wenigstens eines ersten Schaltelements (K1, B) mit dem Gehäuse (G) verbindbar ist und mittels eines zweiten Schaltelements (A) mit der Antriebswelle (ANW) verbindbar ist,und dass das Hohlrad (134) des ersten Planetenradsatzes (PG4) mittels eines dritten Schaltelements (E) mit dem Gehäuse (G) und mittels eines vierten Schaltelements (F) mit dem Steg (124) des ersten Planetenradsatzes (PG4) verbindbar ist, und dass das Sonnenrad (104) des ersten Planetenradsatzes (PG4) und das Hohlrad (131) des zweiten Planetenradsatzes (PG1) drehfest miteinander verbunden sind,und dass die Mehrheit, insbesondere alle Schaltelemente (A, B, E, F, K1), von außen zugänglich in dem Gehäuse (G) angeordnet sind, **dadurch gekennzeichnet, dass** der zweite Planetenradsatz (PG1) wenigstens zwei miteinander kämmende Planeten (111.1, 111.2) und zwei drehfest miteinander verbundene Stege (121.1, 121.2) aufweist, auf welchen jeweils einer der zwei miteinander kämmenden Planeten (111.1., 111.2) drehbar gelagert ist,und dass die Stege (121.1, 121.2) des zweiten Planetenradsatzes (PG1) drehfest mit der Antriebswelle (ANW) verbunden sind, und der Steg (124) des ersten Planetenradsatzes (PG4) drehfest mit der Abtriebswelle (AW) verbunden ist, wobei das Getriebe wenigstens einen weiteren dritten, vierten, fünften und/oder sechsten Planetenradsatz (PG2, PG3, PG5, PG6) aufweist, wobei wenigstens zwei der Planetenradsätze (PG1, PG2, PG3, PG4, PG5, PG6) hintereinander im Getriebe (1, 10) und/oder wenigstens zwei der Planetenradsätze (PG3, PG4; PG5, PG6) geschachtelt angeordnet sind, wobei der dritte Planetenradsatz (PG2) zwischen dem zweiten und vierten Planetenradsatz (PG1, PG3) angeordnet ist, wobei ein Sonnenrad (102) des dritten Planetenradsatzes (PG2) mit dem Gehäuse (G) gehäusefest verbunden oder mittels eines fünften Schaltelements (B2, C) mit dem Gehäuse (G) verbindbar ist, wobei die Stege (111.1, 111.2) des zweiten Planetenradsatzes (PG1) drehfest mit einem Hohlrad (132) des dritten Planetenradsatzes (PG2) verbunden sind oder die Stege (111.1, 111.2) des zweiten Planetenradsatzes (PG1) mittels eines achten Schaltelements (X) mit dem Hohlrad (132) des dritten Planetenradsatzes (PG2) verbindbar sind.

2. Getriebe gemäß Anspruch 1, **dadurch gekennzeichnet, dass** ein Steg (122) des dritten Planetenradsatzes (PG2) drehfest mit einem Hohlrad (133) des vierten Planetenradsatzes (PG3) verbunden ist, der Steg (122) des dritten Planetenradsatzes (PG2) mit einem Sonnenrad (105) des fünften Planetenradsatzes (PG5) verbunden ist, der Steg (122) des dritten Planetenradsatzes (PG2) mittels eines sechsten Schaltelements (C) mit dem Sonnenrad (104) des ersten Planetenradsatzes (PG4) verbindbar ist und/oder mittels eines siebten Schaltelements (D) mit dem Hohlrad (133) des vierten Planetenradsatzes (PG3) verbindbar ist.

3. Getriebe gemäß einem der Ansprüche 1 bis 2, **dadurch gekennzeichnet, dass** eine elektrische Maschine (EM) angeordnet ist, insbesondere zur Bereitstellung von Rückwärtsgängen durch das Getriebe (1,10).

4. Getriebe gemäß einem der Ansprüche 1 bis 3, **dadurch gekennzeichnet, dass** ein Sonnenrad (103) des vierten Planetenradsatzes (PG3) mit dem Gehäuse (G) verbunden oder mittels eines neunten Schaltelements (K, Y) mit dem Gehäuse (G) verbindbar ist.

5. Getriebe gemäß einem der Ansprüche 1 bis 4, **dadurch gekennzeichnet, dass** ein Sonnenrad (103) des vierten Planetenradsatzes (PG3) mittels eines zehnten Schaltelements (J) mit einem Hohlrad (133) des vierten Planetenradsatzes (PG3) verbindbar ist.

6. Getriebe gemäß einem der Ansprüche 1 bis 5, **dadurch gekennzeichnet, dass** das Hohlrad (134) des ersten Planetenradsatzes (PG4) mit dem vierten Schaltelement (F) mit der Abtriebswelle (AW), verbindbar ist.

7. Getriebe gemäß einem der Ansprüche 1 bis 6, **dadurch gekennzeichnet, dass** der fünfte Planetenradsatz (PG5) und der sechste Planetenradsatz (PG6) geschachtelt angeordnet sind und eine Rückwärtsgang-Gruppe bilden, wobei die Rückwärtsgang-Gruppe am Ausgang des Getriebes (1) angeordnet ist und wobei das Sonnenrad (105) des fünften Planetenradsatzes (PG5) mit dem Steg (124) des ersten Planetenradsatzes (PG4) drehfest verbunden ist, und ein Steg (125) des fünften Planetenradsatzes (PG5) mittels eines elften Schaltelements (R) zur Darstellung wenigstens eines Rückwärtsgangs (R1, R2, R3, R4, R5, R6, R7) mit dem Gehäuse (G) verbindbar ist und wobei ein Sonnenrad (106) des sechsten Planetenradsatzes (PG6) mittels eines zwölften Schaltelements (L) mit dem Gehäuse (G) verbindbar ist und mittels eines dreizehnten Schaltelements (H) mit dem Steg (125) des fünften Planetenradsatzes (PG5) verbindbar ist.

8. Getriebe gemäß einem der Ansprüche 1 bis 7, **dadurch gekennzeichnet, dass** der erste Planetenradsatz (PG4) und der zweite Planetenradsatz (PG1) ein erstes Teilgetriebe (TG1) bilden und dass der erste Planetenradsatz (PG4) zusammen mit dem dritten Planetenradsatz (PG2) und dem vierte Planetenradsatz (PG3) ein zweites Teilgetriebe (TG2) bildet.

9. Getriebe gemäß einem der Ansprüche 1 bis 8, **dadurch gekennzeichnet, dass** ein Vorgelege (VG3) angeordnet ist, wobei das Vorgelege (VG3) wenigstens eine Vorgelegewelle (VW1) und wenigstens zwei Radebenen (I, II) aufweist, wobei die erste Radebene (I) mittels eines Schaltelements (D) mit einem Steg (122) des dritten Planetenradsatzes (PG3) verbindbar ist und die zweite Radebene (II) mit dem Steg (124) des ersten Planetenradsatzes (PG4) in Triebverbindung steht.

10. Getriebe gemäß einem der Ansprüche 1 bis 9, **dadurch gekennzeichnet, dass** eine Trennkupplung (K0) als Anfahrkupplung vorgesehen ist, welche insbesondere einen Antriebsmotor mit der Antriebswelle (ANW) am Eingang des Getriebes (1) verbindet.

11. Kraftfahrzeug, insbesondere ein Personen- oder ein Lastkraftwagen, mit einem Getriebe (1) gemäß einem der Ansprüche 1 bis 10.

## Claims

1. Transmission (1, 10), in particular multi-stage transmission, for a motor vehicle, comprising a housing (G), a drive shaft (ANW), an output shaft (AW), at least two planetary gear sets (PG1, PG4), wherein the first planetary gear set (PG4) comprises a sun gear (104), at least one planet (114), a carrier (124) and a ring gear (134), and multiple shift elements (A-F, H, J, K, L, V, R, X, Y) and a second planetary gear set (PG1) with a sun gear (101), at least one planet (111.1, 111.2 and a ring gear (131), wherein a sun gear (101) of the second planetary gear set (PG1) is connectable by means of at least one first shift element (K1, B) to the housing (G) and is connectable by means of a second shift element (A) to the drive shaft (ANW), and in that the ring gear (134) of the first planetary gear set (PG4) is connectable by means of a third shift element (E) to the housing (G) and by means of a fourth shift element (F) to the carrier (124) of the first planetary gear set (PG4), and in that the sun gear (104) of the first planetary gear set (PG4) and the ring gear (131) of the second planetary gear set (PG1) are connected rotationally conjointly to one another, and in that the majority, in particular all, of the shift elements (A, B, E, F, K1) are arranged in the housing (G) so as to be accessible from the outside, **characterized in that** the second planetary gear set (PG1) has at least two intermeshing planets (111.1, 111.2) and two carriers (121.1, 121.2) which are connected rotationally conjointly to one another, on which carriers in each case one of the two intermeshing planets (111.1, 111.2) is rotatably mounted, and **in that** the carriers (121.1, 121.2) of the second planetary gear set (PG1) are connected rotationally conjointly to the drive shaft (ANW), and the carrier (124) of the first planetary gear set (PG4) is connected rotationally conjointly to the output shaft (AW), wherein the transmission has at least one further third, fourth, fifth and/or sixth planetary gear set (PG2, PG3, PG5, PG6), wherein at least two of the planetary gear sets (PG1, PG2, PG3, PG4, PG5, PG6) are arranged one behind the other in the transmission (1, 10) and/or at least two of the planetary gear sets (PG3, PG4; PG5, PG6) are arranged in nested fashion, wherein the third planetary gear set (PG2) is arranged between the second and fourth planetary gear sets (PG1, PG3), wherein a sun gear (102) of the third planetary gear set (PG2) is connected fixedly to the housing (G) or is connectable by means of a fifth shift element (B2, C) to the housing (G), wherein the carriers (111.1, 111.2) of the second planetary gear set (PG1) are connected rotationally conjointly to a ring gear (132) of the third planetary gear set (PG2), or the carriers (111.1, 111.2) of the second planetary gear set (PG1) are connectable to the ring gear (132) of the third planetary gear set (PG2) by means of an eighth shift element (X).

2. Transmission according to Claim 1, **characterized in that** a carrier (122) of the third planetary gear set (PG2) is connected rotationally conjointly to a ring gear (133) of the fourth planetary gear set (PG3), the carrier (122) of the third planetary gear set (PG2) is connected to a sun gear (105) of the fifth planetary gear set (PG5), the carrier (122) of the third planetary gear set (PG2) is connectable by means of a sixth shift element (C) to the sun gear (104) of the first planetary gear set (PG4) and/or is connectable by means of a seventh shift element (D) to the ring gear (133) of the fourth planetary gear set (PG3).

3. Transmission according to either of Claims 1 and 2, **characterized in that** an electric machine (EM) is provided, in particular for providing reverse gear ratios through the transmission (1, 10).

4. Transmission according to any of Claims 1 to 3, **characterized in that** a sun gear (103) of the fourth planetary gear set (PG3) is connected to the housing (G) or is connectable by means of a ninth shift element (K, Y) to the housing (G).

5. Transmission according to any of Claims 1 to 4, **characterized in that** a sun gear (103) of the fourth planetary gear set (PG3) is connectable by means of a tenth shift element (J) to a ring gear (133) of the fourth planetary gear set (PG3).

6. Transmission according to any of Claims 1 to 5, **characterized in that** the ring gear (134) of the first planetary gear set (PG4) is connectable by means of the fourth shift element (F) to the output shaft (AW).

7. Transmission according to any of Claims 1 to 6, **characterized in that** the fifth planetary gear set (PG5) and the sixth planetary gear set (PG6) are arranged in nested fashion and form a reverse gear ratio group, wherein the reverse gear ratio group is arranged at the output of the transmission (1), and wherein the sun gear (105) of the fifth planetary gear set (PG5) is connected rotationally conjointly to the carrier (124) of the first planetary gear set (PG4), and a carrier (125) of the fifth planetary gear set (PG5) is connectable by means of an eleventh shift element (R), for realizing at least one reverse gear ratio (R1, R2, R3, R4, R5, R6, R7), to the housing (G), and wherein a sun gear (106) of the sixth planetary gear set (PG6) is connectable by means of a twelfth shift element (L) to the housing (G) and is connectable by means of a thirteenth shift element (H) to the carrier (125) of the fifth planetary gear set (PG5) .

8. Transmission according to any of Claims 1 to 7, **characterized in that** the first planetary gear set (PG4) and the second planetary gear set (PG1) form a first sub-transmission (TG1), and **in that** the first planetary gear set (PG4) together with the third planetary gear set (PG2) and the fourth planetary gear set (PG3) form a second sub-transmission (TG2).

9. Transmission according to any of Claims 1 to 8, **characterized in that** a countershaft arrangement (VG3) is provided, wherein the countershaft arrangement (VG3) has at least one countershaft (VW1) and at least two gear planes (I, II), wherein the first gear plane (I) is connectable by means of a shift element (D) to a carrier (122) of the third planetary gear set (PG3) and the second gear plane (II) has a drive connection to the carrier (124) of the first planetary gear set (PG4).

10. Transmission according to any of Claims 1 to 9, **characterized in that** a separating clutch (K0) is provided as launch clutch, which separating clutch in particular connects a drive engine to the drive shaft (ANW) at the input of the transmission (1).

11. Motor vehicle, in particular a passenger motor vehicle or motor truck, having a transmission (1) according to any of Claims 1 to 10.

## Revendications

1. Boîte de vitesses (1, 10), en particulier boîte de vitesses à plusieurs étages, pour un véhicule automobile, comprenant un boîtier (G), un arbre d'entraînement (ANW), un arbre de prise de force (AW), au moins deux trains planétaires (PG1, PG4), le premier train planétaire (PG4) comprenant une roue solaire (104), au moins un satellite (114), un porte-satellites (124) et une couronne dentée (34), ainsi que plusieurs éléments de commutation (A-F, H, J, K, L, V, R, X, Y) et un deuxième train planétaire (PG1) avec une roue solaire (101), au moins un satellite (111.1, 111.2 et une couronne dentée (131), une roue solaire (101) du deuxième train planétaire (PG1) pouvant être connectée au boîtier (G) au moyen d'au moins un premier élément de commutation (K1, B) et en ce que la couronne dentée (134) du premier train planétaire (PG4) peut être connectée au boîtier (G) au moyen d'un troisième élément de commutation (E) et au porte-satellites (124) du premier train planétaire (PG4) au moyen d'un quatrième élément de commutation (F) et en ce que la roue solaire (104) du premier train planétaire (PG4) et la couronne dentée (131) du deuxième train planétaire (PG1) sont connectées l'une à l'autre de manière solidaire en rotation, et en ce que la majorité, en particulier la totalité, des éléments de commutation (A, B, E, F, K1) sont disposés de manière accessible depuis l'extérieur dans le boîtier (G), **caractérisé en ce que** le deuxième train planétaire (PG1) présente au moins deux satellites (111.1, 111.2) s'engrenant l'un avec l'autre et deux porte-satellites (121.1, 121.2) connectés l'un à l'autre de manière solidaire en rotation, sur lesquels est à chaque fois supporté à rotation l'un des deux satellites (111.1, 111,2) s'engrenant l'un avec l'autre, et **en ce que** les porte-satellites (121.1, 121.2) du deuxième train planétaire (PG1) sont connectés de manière solidaire en rotation à l'arbre d'entraînement (ANW), et le porte-satellites (124) du premier train planétaire (PG4) est connecté de manière solidaire en rotation à l'arbre de prise de force (AW), la boîte de vitesses présentant au moins un troisième, quatrième, cinquième et/ou sixième train planétaire supplémentaire (PG2, PG3, PG5, PG6), au moins deux des trains planétaires (PG1, PG2, PG3, PG4, PG5, PG6) étant disposés l'un derrière l'autre dans la boîte de vitesses (1, 10) et/ou au moins deux des trains planétaires (PG3, PG4 ; PG5, PG6) étant disposés de manière emboîtée, le troisième train planétaire (PG2) étant disposé entre le deuxième et le quatrième train planétaire (PG1, PG3), une roue solaire (102) du troisième train planétaire (PG2) étant connectée fixement au boîtier (G) ou au moins un quatrième élément de commutation (B2, C) pouvant être connecté au boîtier (G), les porte-satellites (111.1, 111.2) du deuxième train planétaire (PG1) étant connectés de manière solidaire en rotation à une couronne dentée (132) du troisième train planétaire (PG2) ou les porte-satellites (111.1, 111.2) du deuxième train planétaire (PG1) pouvant être connectés à la couronne dentée (130) du troisième train planétaire (PG2) au moyen d'un huitième élément de commutation (X).

2. Boîte de vitesses selon la revendication 1, **caractérisée en ce qu'**un porte-satellites (122) du troisième train planétaire (PG2) est connecté de manière solidaire en rotation à une couronne dentée (133) du quatrième train planétaire (PG3), le porte-satellites (122) du troisième train planétaire (PG2) étant connecté à une roue solaire (105) du cinquième train planétaire (PG5), le porte-satellites (122) du troisième train planétaire (PG2) pouvant être connecté au moyen d'un sixième élément de commutation (C) à la roue solaire (104) du premier train planétaire (PG4) et/ou pouvant être connecté au moyen d'un septième élément de commutation (D) à la couronne dentée (133) du quatrième train planétaire (PG3).

3. Boîte de vitesses selon l'une quelconque des revendications 1 et 2, **caractérisée en ce qu'**une machine électrique (EM) est prévue, en particulier pour permettre à la boîte de vitesses (1, 10) de fournir des vitesses de marche arrière.

4. Boîte de vitesses selon l'une quelconque des revendications 1 à 3, **caractérisée en ce qu'**une roue solaire (103) du quatrième train planétaire (PG3) est connectée au boîtier (G) ou peut être connectée au boîtier (G) au moyen d'un neuvième élément de commutation (K, Y).

5. Boîte de vitesses selon l'une quelconque des revendications 1 à 4, **caractérisée en ce qu'**une roue solaire (103) du quatrième train planétaire (PG3) peut être connectée à une couronne dentée (133) du quatrième train planétaire (PG3) au moyen d'un dixième élément de commutation (J).

6. Boîte de vitesses selon l'une quelconque des revendications 1 à 5, **caractérisée en ce que** la couronne dentée (134) du premier train planétaire (PG4) peut être connectée à l'arbre de prise de force (AW) au moyen du quatrième élément de commutation (F).

7. Boîte de vitesses selon l'une quelconque des revendications 1 à 6, **caractérisée en ce que** le cinquième train planétaire (PG5) et le sixième train planétaire (PG6) sont disposés de manière emboîtée et forment un groupe de vitesses de marche arrière, le groupe de vitesses de marche arrière étant disposé à la sortie de la boîte de vitesses (1) et la roue solaire (105) du cinquième train planétaire (PG5) étant connectée de manière solidaire en rotation au porte-satellites (124) du premier train planétaire (PG4), et un porte-satellites (125) du cinquième train planétaire (PG5) pouvant être connecté au boîtier (G) au moyen d'un onzième élément de commutation (R) pour constituer au moins une vitesse de marche arrière (R1, R2, R3, R4, R5, R6, R7) et une roue solaire (106) du sixième train planétaire (PG6) pouvant être connectée au boîtier (G) au moyen d'un douzième élément de commutation (L) et pouvant être connectée au porte-satellites (125) du cinquième train planétaire (PG5) au moyen d'un treizième élément de commutation (H).

8. Boîte de vitesses selon l'une quelconque des revendications 1 à 7, **caractérisée en ce que** le premier train planétaire (PG4) et le deuxième train planétaire (PG1) forment une première boîte de vitesses partielle (TG1) et **en ce que** le premier train planétaire (PG4) forme conjointement avec le troisième train planétaire (PG2) et le quatrième train planétaire (PG3) une deuxième boîte de vitesses partielle (TG2).

9. Boîte de vitesses selon l'une quelconque des revendications 1 à 8, **caractérisée en ce qu'**un réducteur (VG3) est prévu, le réducteur (VG3) présentant au moins un arbre intermédiaire (VW1) et au moins deux plans de roue (I, II), le premier plan de roue (I) pouvant être connecté à un porte-satellites (122) du troisième train planétaire (PG3) au moyen d'un élément de commutation (D), et le deuxième plan de roue (II) étant en liaison d'entraînement avec le porte-satellites (124) du premier train planétaire (PG4).

10. Boîte de vitesses selon l'une quelconque des revendications 1 à 9, **caractérisée en ce qu'**un embrayage de séparation (K0) est prévu en tant qu'embrayage de démarrage, lequel relie notamment un moteur d'entraînement à l'arbre d'entraînement (ANW) à l'entrée de la boîte de vitesses (1).

11. Véhicule automobile, en particulier véhicule léger ou véhicule poids-lourd, comprenant une boîte de vitesses (1) selon l'une quelconque des revendications 1 à 10.
